(19) Europäisches Patentamt
European Patent Office
Office européen des brevets

(11) **EP 3 462 129 B1**

(12) **EUROPÄISCHE PATENTSCHRIFT**

(45) Veröffentlichungstag und Bekanntmachung des Hinweises auf die Patenterteilung:
**27.11.2019 Patentblatt 2019/48**

(51) Int Cl.:
***G01B 11/25*** *(2006.01)*   ***G01M 11/02*** *(2006.01)*
***G03B 3/04*** *(2006.01)*

(21) Anmeldenummer: **18201415.9**

(22) Anmeldetag: **07.04.2017**

(54) **VORRICHTUNG UND VERFAHREN ZUM VERMESSEN EINER FLÄCHENTOPOGRAFIE SOWIE KALIBRIERVERFAHREN**

DEVICE AND METHOD FOR MEASURING A SURFACE TOPOGRAPHY AND CALIBRATION METHOD

DISPOSITIF ET PROCÉDÉ DE MESURE D'UNE TOPOGRAPHIE DE SURFACE AINSI QUE PROCÉDÉ D'ÉTALONNAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.04.2016 DE 102016106535**

(43) Veröffentlichungstag der Anmeldung:
**03.04.2019 Patentblatt 2019/14**

(62) Dokumentnummer(n) der früheren Anmeldung(en) nach Art. 76 EPÜ:
**17717366.3 / 3 440 427**

(73) Patentinhaber: **Carl Zeiss AG**
**73447 Oberkochen (DE)**

(72) Erfinder:
• **OMLOR, Lars**
**Pleasanton, CA 94566 (US)**
• **GLASENAPP, Carsten**
**73447 Oberkochen (DE)**

(74) Vertreter: **Gauss, Nikolai et al**
**Pfiz/Gauss Patentanwälte PartmbB**
**Tübingerstraße 26**
**70178 Stuttgart (DE)**

(56) Entgegenhaltungen:
| | |
|---|---|
| EP-A1- 1 884 828 | EP-A1- 2 101 143 |
| DE-A1-102011 010 252 | DE-A1-102013 208 091 |
| DE-A1-102013 219 838 | US-A- 4 998 819 |
| US-A1- 2005 068 523 | US-A1- 2006 017 720 |
| US-A1- 2010 079 598 | |

EP 3 462 129 B1

**Beschreibung**

Die Erfindung betrifft Verfahren und Vorrichtungen für das Vermessen der Topografie und/oder der Gradienten und/oder der Krümmung einer optisch wirksamen Fläche eines Gegenstands, insbesondere eines Brillenglases

Die US 4,998,819 offenbart eine Vorrichtung für das Vermessen der Topografie eines Gegenstands, in der mittels einer Vielzahl von auf der Innenseite eines Kugeloberflächenabschnitts angeordneten Leuchtdioden an der Oberfläche des Gegenstands Reflexionen erzeugt werden, die mit einem Fotodetektor erfasst und dann ausgewertet werden.

Eine Vorrichtung für das Vermessen der Topografie und/oder der Gradienten und/oder der Krümmung einer optisch wirksamen Fläche eines als ein Brillenglas ausgebildeten Gegenstands ist z. B. in der DE 10 2013 208 091 A1 und der DE 10 2013 219 838 A1 beschrieben. Um die räumliche Struktur des Gegenstands zu ermitteln, wird dieser in einer Halteeinrichtung angeordnet. Dann wird Licht aus einer Vielzahl von Punktlichtquellen bereitgestellt, das an der optisch wirksamen Fläche des Gegenstands reflektiert wird. In der Vorrichtung für das Vermessen der Topografie und/oder der Gradienten und/oder der Krümmung wird eine von dem Licht der Punktlichtquellen hervorgerufene Helligkeitsverteilung mit einer Kamera erfasst und mittels eines Computerprogramms ausgewertet. Das Computerprogramm berechnet für einen jeden mittels der Kamera erfassten Lichtstrahl von einem Punkt auf der Oberfläche des Gegenstands und bekannten Positionen der Punktlichtquellen die Oberflächennormale an diesem Punkt und berechnet daraus durch Integration und Interpolation dann die gesuchte Topografie der optisch wirksamen Fläche.

Aus der DE 10 2011 010 252 A1 ist eine Kamera mit einem beweglichen Bildsensor bekannt, der in der Richtung der optischen Achse der Kamera verlagert werden kann.

Aus der DE 10 2011 010 252 A1 ist eine Kamera mit einem beweglichen Bildsensor bekannt, der in der Richtung der optischen Achse der Kamera verlagert werden kann.

Die US 2006/0017720 A1 offenbart ein System für das Vermessen einer das Licht diffus streuenden Oberfläche, indem diese mittels eines Scanners mit Lichtstrahlen gescannt wird, die auf der Oberfläche ein Muster erzeugen, das dann mit einer Kamera erfasst wird. Durch Auswerten der auf der zu vermessenden Oberfläche gebildeten Form des Musters und der Relativposition von Scanner und Kamera kann das System dann den gesuchten Verlauf der zu vermessenden Oberfläche angeben.

Aufgabe der Erfindung ist es, eine Vorrichtung und ein Verfahren für das präzise lokale Vermessen der Topografie und/oder der Gradienten und/oder der Krümmung einer optisch wirksamen Fläche eines Gegenstands mit einem geringen relativen Fehler bereitzustellen, z. B. einem relativen Fehler, der lediglich im Prozentbereich liegt oder geringer ist.

Insbesondere ist es eine Aufgabe der Erfindung, eine Vorrichtung und ein Verfahren für das Vermessen der lokalen Krümmungsverläufe von optisch wirksamen Flächen mit einer absoluten Genauigkeit von mindestens $10^{-2}$ dpt anzugeben.

Diese Aufgabe wird mit den in den unabhängigen Ansprüchen angegebenen Verfahren und Vorrichtungen für das Vermessen der Topografie und/oder der Gradienten und/oder der Krümmung einer optisch wirksamen Fläche eines Gegenstands, insbesondere eines Brillenglases und das in dem unabhängigen Anspruch angegebene Verfahren zum Kalibrieren einer Vorrichtung für das Vermessen der Topografie und/oder der Gradienten und/oder der Krümmung einer optisch wirksamen Fläche eines Gegenstands gelöst. Vorteilhafte Ausführungsformen der Erfindung sind in den abhängigen Ansprüchen angegeben.

Unter einer Punktlichtquelle im Sinne der Erfindung wird eine Lichtquelle verstanden, deren Ausdehnung so gering ist, dass diese von einem innerhalb des Aufnahmebereichs liegenden Punkt aus gesehen im Wesentlichen punktförmig erscheint, d. h., die auf einen in dem Aufnahmebereich liegenden Punkt bezogen z. B. nur einen Raumwinkel $\Omega_P$ der Größe $\Omega_P \leq 0{,}5\%$ sr oder $\Omega_P \leq 0{,}3\%$ sr oder $\Omega_P \leq 0{,}1\%$ sr oder bevorzugt der Größe $\Omega_P \leq 0{,}05\%$ sr abdeckt. Eine solche Punktlichtquelle kann als eine Leuchtdiode (LED) ausgebildet sein, z. B. als eine sogenannte SMD-Leuchtdiode.

Eine Punktlichtquelle im Sinne der Erfindung kann allerdings auch als ein in der Polyederoberfläche angeordnetes Ende eines Lichtleiters ausgebildet sein. Eine Punktlichtquelle im Sinne der Erfindung kann aber auch ein Loch in einer Lochmaske sein, der eine oder mehrere Hintergrundbeleuchtungen zugeordnet sind. Eine Punktlichtquelle im Sinne der Erfindung dient dazu, die optisch wirksame Fläche des zu vermessenden Gegenstands mit einem Lichtpunkt zu beleuchten.

Die Erfindung beruht auf dem Gedanken, dass durch Erfassen von Informationen über die Position einer Vielzahl von Punkten der Oberfläche eines Gegenstands sowohl die Krümmung als auch die Topografie der Oberfläche des Gegenstands sehr präzise ermittelt werden kann, indem die erfasste Position mit Algorithmen in einer Rechnereinheit mit einem Computerprogramm verarbeitet wird. Dabei ist es eine Idee der Erfindung, die erfasste Information mit iterativen Algorithmen zu verarbeiten und damit die Messgenauigkeit für das Vermessen des Gegenstands erheblich zu steigern. Darüber hinaus ist es eine Idee der Erfindung, das Rechnen mit iterativen Algorithmen auf zentrale leistungsfähige Rechenmaschinen an beliebigen Orten auf der Welt auszulagern (Remote Computing), um auf diese Weise das Vermessen der Topografie und/oder der Gradienten und/oder der Krümmung einer optisch wirksamen Fläche eines Gegenstands in kurzer Zeit, d. h. innerhalb von Sekunden durchführen zu können. Im Rahmen der Erfindung können in entsprechenden Algorithmen auch externe Raytracing Programme wie z. B. das Programm CODE V® der Firma Synopsys Inc., 690 East Middlefield Road, Mountain View, California 94043 USA. oder das Programm Zemax® der Firma Zemax LLC, 10230 NE Points Dr. Suite 540, Kirkland, Washington (State) 98033, USA eingebunden werden. Diese Maßnahme ermöglicht insbesondere, erforderliche Rechenzeiten zu verringern. Eine Idee der Erfindung ist es auch, dass die iterativen Algorithmen für das Verarbeiten der zu einer Vielzahl von Punkten der Oberfläche eines Gegenstands erfassten Information auch auf Grafikkartenprozessoren (GPU) ausgelagert werden können. Diese Maßnahme hat ebenfalls verringerte Rechenzeiten zur Folge.

Indem der Bildsensor der Kamera entlang einer die Objektivbaugruppe durchsetzenden Verstellachse linearbeweglich verlagerbar angeordnet ist, lässt sich erreichen, dass die Vorrichtung durch Vermessen von Testobjekten sehr genau kalibriert werden kann.

Die Erfindung ermöglicht damit insbesondere eine Vermessung der Brechkraft einer Asphäre mit einer Genauigkeit von mindestens $10^{-2}$ dpt. Darüber hinaus ermöglicht die Erfindung eine Vermessung der Topografie von konkaven und konvexen Freiformflächen. Insbesondere ermöglicht die Erfindung eine Vermessung von asphärischen Linsen mit mittleren Radien zwischen - 50 mm ... -1000 mm und +50 mm ... +1000 mm bei einer Objektgröße bis zu 80 mm im Durchmesser sowie eine Vermessung der lokalen als auch der gesamten Brechkraft sowie der Topografie. Die Erfinder konnten zeigen, dass es mit der Erfindung möglich ist, Freiformflächen innerhalb eines Zeitintervalls zu vermessen, das 10s nicht übersteigt, wenn von vorstehend erwähntem Remote Computing Gebrauch gemacht wird.

Die Punktlichtquellen in einer erfindungsgemäßen Vorrichtung für das Vermessen der Topografie und/oder der Gradienten und/oder der Krümmung einer optisch wirksamen Fläche eines Gegenstands sind bevorzugt auf einer einen dreidimensionalen Halbraum begrenzenden zweidimensionalen Hyperfläche angeordnet.

Die den dreidimensionalen Halbraum begrenzende zweidimensionale Hyperfläche kann z. B. eine Mantelfläche eines Polyeders sein. Unter einem Polyeder wird dabei eine Teilmenge des dreidimensionalen Raumes verstanden, die ausschließlich von geraden Flächen, d. h. Ebenen begrenzt wird. Das Polyeder kann z. B. ein abgestumpfter Ikosaeder, ein Würfel, ein Dodekaeder, ein Ikosaeder, ein 7-Eck Kegelstumpf mit einem Zylinderaufbau, ein 6-Eck Kegelstumpf mit einem Zylinder-Zwischenbau oder ein 9-Eck Kegel mit einem zweiten Kegelstumpf anderer Steigung sein. Die Punktlichtquellen sind dabei bevorzugt zumindest teilweise als Leuchtdioden ausgebildet. Eine Idee der Erfindung ist es auch, für die Punktlichtquellen eine Tragestruktur mit einer Leiterplatte oder mit mehreren Leiterplatten vorzusehen.

Unter einer Leiterplatte, auch Platine genannt, wird vorliegend eine als ein plattenförmiger Träger ausgebildete Flachbaugruppe für das Aufnehmen von elektrischen und/oder elektronischen Bauteilen verstanden. Auf einer solchen Flachbaugruppe können diese Bauteile frei verdrahtet werden oder in einer bevorzugten Ausführungsform an in elektrisch isolierendem Material festhaftende, leitende Verbindungen angeschlossen werden. Der plattenförmige Träger der Flachbaugruppe kann z. B. aus dem Material FR2, FR3, CEM1, CEM3 oder FR4 hergestellt sein.

Leuchtdioden in Form von SMDs können in Bestückungsautomaten auf Leiterplatten montiert werden. Bestückungsautomaten ermöglichen dabei das definierte Positionieren von Leuchtdioden auf einer Leiterplatte mit einer Positioniergenauigkeit, die im Bereich von 0,001 mm bis 0,01 mm liegt und z. B. mit einem CAD-Programm exakt vorgegeben werden kann.

Günstiger Weise hat die Objektivbaugruppe eine optische Achse, die mit der Verstellachse fluchtet. Unter der optischen Achse der Objektivbaugruppe wird dabei die Verbindungslinie der Krümmungsmittelpunkte der das Licht brechenden Flächen der optischen Elemente der Objektivbaugruppe verstanden. In der Regel ist die optische Achse die Symmetrieachse der optischen Elemente einer optischen Baugruppe.

Eine erfindungsgemäße Vorrichtung kann eine zwischen dem Aufnahmebereich und der Objektivbaugruppe angeordnete Linse, vorzugsweise Feldlinse, aufweisen, deren Brechkraft positiv oder negativ ist. Unter dem Begriff Feldlinse wird vorliegend eine Kollektivlinse verstanden, die bewirkt, dass der auf die Oberflächennormale bezogene Einfallswinkel des von den Punktlichtquellen ausgesendeten Lichts auf die optisch wirksame Fläche des zu vermessenden Gegenstands steiler wird. Damit lässt sich erreichen, dass auch die Topografie optisch wirksamer konkaver Oberflächen eines zu vermessenden Gegenstands mit hoher Genauigkeit bestimmt werden kann.

Von Vorteil ist es, wenn auch die Linse, vorzugsweise Feldlinse, eine mit der optischen Achse der Objektivbaugruppe fluchtende optische Achse hat, d.h. eine Symmetrieachse, die mit der optischen Achse der Objektivbaugruppe zusammenfällt. Auf diese Weise ist es möglich, konkave optisch wirksame Flächen von Gegenständen mit einer großen Genauigkeit zu vermessen. Um eine erfindungsgemäße Vorrichtung für das Vermessen der Topografie und/oder der Gradienten und/oder der Krümmung einer optisch wirksamen Fläche eines Gegenstands zu kalibrieren, wird die Position der kugelförmigen Anlage in einem zu dem Bildsensor der Kamera referenzierten Koordinatensystem und der Abbildungsmaßstab sowie die Verzeichnung des optischen Abbildungssystems der Kamera bestimmt. Hier ist es insbesondere von Vorteil, wenn die Position der Anlage durch Vermessen von Testobjekten einer bekannten Geometrie unter Anwendung eines Optimierungsverfahrens ermittelt wird. Der Abbildungsmaßstab kann durch Vermessen der Helligkeitsverteilung eines scheibenförmigen Testobjekts auf dem Bildsensor bestimmt werden.

Von Vorteil ist es auch, wenn der Verlauf der Verstellachse des Bildsensors in einem zu dem Bildsensor referenzierten Koordinatensystem bestimmt wird. Insbesondere ist es von Vorteil, wenn die Position der Punktlichtquellen in einem zu dem Bildsensor der Kamera referenzierten Koordinatensystem mit einem Optimierungsverfahren bestimmt wird, d.h. mit einem Verfahren, bei dem eine Zielfunktion maximiert oder minimiert wird.

Als ein Optimierungsverfahren kann hier z.B. ein Optimierungsverfahren eingesetzt werden, das eine Zielfunktion minimiert, mittels der die Abweichung zwischen einer Objektrekonstruktion von einer bekannten Geometrie der Testobjekte bestimmt wird, wobei das Bestimmen des Maximums oder Minimums der Zielfunktion durch Variieren von Systemparametern ermittelt wird. Dieses Variieren der Systemparameter kann z.B. mit einem Gradientenabstiegsverfahren durchgeführt werden.

Bei einer erfindungsgemäße Vorrichtung mit einer zwischen dem Aufnahmebereich und der Objektivbaugruppe angeordneten Linse, vorzugsweise Feldlinse, ist es günstig, wenn in einem ersten Schritt die Reflexe der Punktlichtquellen an der Linse, vorzugsweise Feldlinse, bestimmt und dann diese Reflexe in der zu einem Testobjekt erfassten Helligkeitsverteilung auf dem Bildsensor unterdrückt werden.

Für das Vermeiden von störenden Lichtreflexen ist es von Vorteil, wenn zwischen den Punktlichtquellen ein Material angeordnet ist, welches das Licht in dem Wellenlängenbereich des von den Punktlichtquellen ausgesendeten Lichts absorbiert.

Die Erfindung betrifft auch ein Computerprogramm mit Programmcodemitteln zur Durchführung eines Verfahrens für das Vermessen der Topografie und/oder der Gradienten und/oder der Krümmung einer optisch wirksamen Fläche eines Gegenstands.

Darüber hinaus betrifft die Erfindung einen Computer mit einem Prozessor und einem Speicher, in dem ein vorstehend angegebenes Computerprogramm abgespeichert ist.

Zu bemerken ist, dass in einem nicht von der Erfindung umfassten Verfahren die Topografie und/oder die Gradienten und/oder die Krümmung einer optisch wirksamen Fläche eines Gegenstands auch mit folgenden Schritten vermessen werden kann:

i. Anordnen des zu vermessenden Gegenstands an einer an dem Gegenstand anliegenden Anlage in einem Aufnahmebereich;

ii. Erfassen einer aus Leuchtflecke zusammengesetzten Helligkeitsverteilung, die von dem an der zu vermessenden Fläche reflektierten Licht einer oder mehrerer Punktlichtquellen auf einem Bildsensor hervorgerufen wird;

iii. Ermitteln der Zentroiden der Leuchtflecke auf dem Bildsensor;

iv. Zuordnen der Helligkeitsverteilung zu den die Helligkeitsverteilung hervorrufenden Punktlichtquellen;

v. Bestimmen von Reflexionsorten für das von den Punktlichtquellen ausgesendete Licht auf dem Gegenstand;

vi. Berechnen von Flächennormalen $\vec{n}$ an den Reflexionsorten für das von den Punktlichtquellen ausgesendete Licht;

vii. Berechnen der Topographie des Gegenstandes durch Integration der durch die Flächennormalen $\vec{n}$ bestimmten Richtungsableitungen der Fläche; sowie

viii. iteratives Wiederholen der Schritte v. bis vii. bis zu einem Konvergenzkriterium, d.h., die iterativen Schritte v. bis vii. werden solange wiederholt, bis eine Normdifferenz der in zwei aufeinanderfolgenden Schritten berechneten Topografien kleiner ist als eine vorgegebene Toleranz; und

ix. Ermitteln der Lage und/oder der Position wenigstens eines Punktes auf der Fläche des Gegenstands in einem zu dem Koordinatensystem des Bildsensors referenzierten Koordinatensystem.

Zu bemerken ist auch, dass ein nicht von der Erfindung umfasstes Computerprogramm Programmcode für das Kalibrieren einer Vorrichtung für das Vermessen der Topografie und/oder der Gradienten und/oder der Krümmung einer optisch wirksamen Fläche eines Gegenstands enthalten kann, und dass ein nicht von der Erfindung umfasstes Computerprogramm Programmcode, insbesondere für das Ausführen der Schritte iii. bis ix. in dem vorstehend angegebenen Verfahren enthalten kann.

Ein solches Computerprogramm kann in dem Speicher eines Computers mit einem Prozessor und mit einem Speicher abgespeichert sein.

Im Folgenden wird die Erfindung anhand der in der Zeichnung in schematischer Weise dargestellten Ausführungsbeispiele näher erläutert.

Es zeigen:

Fig. 1   eine erste Vorrichtung für das Vermessen der Topografie und/oder der Gradienten und/oder der Krümmung eines Gegenstands in Form eines Brillenglases mit Punktlichtquellen;

Fig. 2   eine Helligkeitsverteilung auf einem Bildsensor einer Kamera in der Vorrichtung;

Fig. 3   den Einfluss von Fertigungstoleranzen auf Apparatekonstanten der Vorrichtung;

Fig. 4   und Fig. 5 die räumliche Beziehung der auf dem Bildsensor erfassten Reflexionspunkte für das Licht an dem Gegenstand in Form eines Brillenglases und der Lage der Punktlichtquellen in der Vorrichtung;

Fig. 6a   und Fig. 6b das Zuordnen von auf dem Bildsensor erfassten Reflexionspunkten für das Licht aus verschiedenen Punktlichtquellen in der Vorrichtung;

Fig. 7   das Ermitteln des Anlagepunkts einer zu vermessenden optisch wirksamen Fläche eines Gegenstands an eine Anlage in der Vorrichtung;

Fig. 8a   das Bild eines in der Vorrichtung angeordneten scheibenförmigen Testobjekts für das Bestimmen von Maschinenparametern bzw. Apparatekonstanten;

Fig. 8b   eine mit dem Bildsensor der Vorrichtung erfasste Helligkeitsverteilung von Reflexionen des Lichts der Punktlichtquelle an einer Sphäre für das Bestimmen von Maschinenparametern bzw. Apparatekonstanten der Vorrichtung;

Fig. 8c   das Bild einer weißen Scheibe in der Vorrichtung für das Bestimmen von Maschinenparametern bzw. Apparatekonstanten der Vorrichtung;

Fig. 9   eine zweite Vorrichtung für das Vermessen der Topografie eines Gegenstands in Form eines Brillenglases;

Fig. 10   den Einfluss von Fertigungstoleranzen auf Apparatekonstanten der Vorrichtung;

Fig. 11   und Fig. 12 die räumliche Beziehung der auf einem Bildsensor in der Vorrichtung erfassten Reflexionspunkte für das Licht an dem zu vermessenden Gegenstand und der Position und/oder der Lage von Punktlichtquellen.

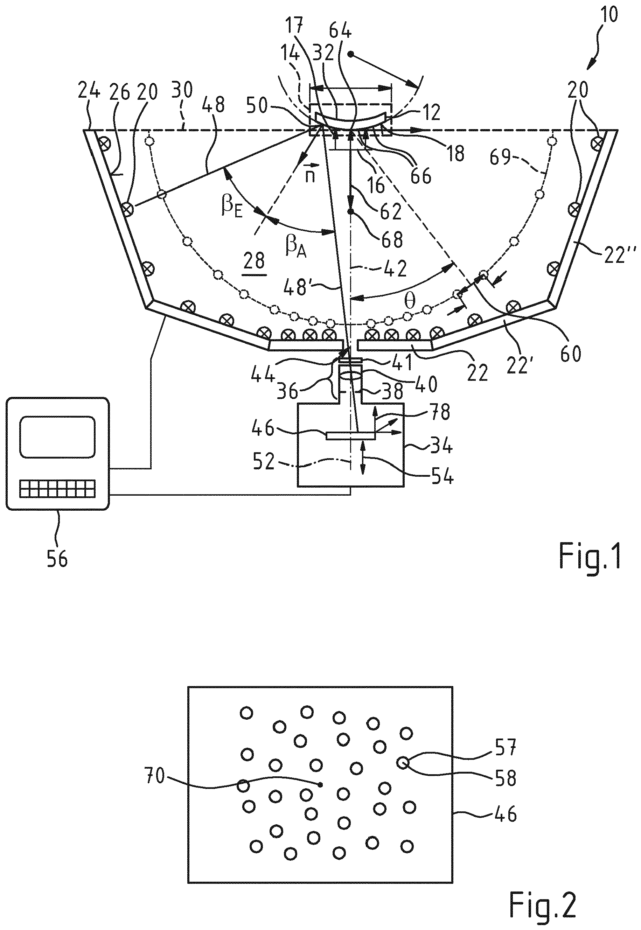

Die in der Fig. 1 gezeigte Vorrichtung 10 ist für das Vermessen der Topografie und/oder der Gradienten und/oder der Krümmung eines Gegenstands 12 in Form eines Brillenglases ausgelegt. Die Vorrichtung 10 hat einen Aufnahmebereich 14, in dem der Gegenstand 12 auf einer Dreipunktauflage 16 angeordnet werden kann. Die Dreipunktauflage 16 ist eine Einrichtung zum Anordnen des Gegenstands 12 in dem Aufnahmebereich 14. Die Dreipunktauflage 16 hält den Gegenstand 12 auf kugelförmigen Anlagen 17 an drei Punkten auf einer zu vermessenden optisch wirksamen Fläche 18.

Die Vorrichtung 10 hat eine Vielzahl von Punktlichtquellen 20 in Form von Leuchtdioden (LEDs), die bei Aktivieren Licht im ultravioletten Spektralbereich mit der Wellenlänge $\lambda \approx 365$ nm emittieren. Diese Leuchtdioden sind als SMDs (surface mounted device) ausgebildet und auf Leiterplatten 22, 22', 22" angeordnet, die zu einer Trägerstruktur 24 zusammengefügt sind. Auf der Trägerstruktur 24 mit den Leiterplatten 22, 22', 22" befinden sich etwa 2000 Punktlichtquellen 20.

In der Vorrichtung 10 sind die Punktlichtquellen 20 auf einer Hyperfläche 26 in Form einer Mantelfläche eines Polyeders positioniert. Die aus den Leiterplatten 22, 22', 22" zusammengefügte Trägerstruktur 24 hat eine gekantete Form und weist deshalb eine große Schwingungsstabilität auf. In der Vorrichtung 10 begrenzt die Hyperfläche 26 einen dreidimensionalen Halbraum 28, der einen offenen Rand 30 hat. UV-Licht mit der Wellenlänge $\lambda \approx 365$ nm wird in dem Glasmaterial handelsüblicher Brillengläser aus Kunststoff absorbiert. Damit wird erreicht, dass das Licht der Punktlichtquellen 20 an der optisch wirksamen Fläche 32, die der optisch wirksamen Fläche 18 eines Gegenstands 12 in Form eines Brillenglases in dem Aufnahmebereich 14 gegenüber liegt, keine das Vermessen der optisch wirksamen Fläche 18 störenden Reflexionen hervorruft.

Um in der Vorrichtung 10 Brillengläser aus Quarzglas zu vermessen, wird mittels der Punktlichtquellen 20 Licht erzeugt, für dessen Wellenlänge $\lambda$ gilt: $\lambda \leq 300$nm. Mit Licht dieser Wellenlänge lassen sich störende Reflexionen des Lichts der Punktlichtquellen 20 von der Rückseite eines Gegenstands 12 in Form eines Brillenglaseses unterbinden.

In der Vorrichtung 10 können grundsätzlich auch metallische Oberflächen sowie lackierte Oberflächen vermessen werden, wobei in diesem Fall die Wellenlänge des Lichts der Punktlichtquellen 20 günstiger Weise im sichtbaren Spektralbereich liegt. Für das Vermessen von rauen Oberflächen, für deren Rauheit Rz gilt:

$$Rz > 1\ \mu m$$

ist es von Vorteil, wenn die Punktlichtquellen 20 Licht aussenden, dessen Wellenlänge im infraroten Spektralbereich liegt, da raue Oberflächen für dieses Licht eine Spiegelwirkung haben.

Die Vorrichtung 10 enthält eine Kamera 34 mit einem optischen Abbildungssystem 36, das eine Blende 38, eine Objektivbaugruppe 40 mit Objektivlinsen und ein UV-Sperrfilter 41 aufweist. Das optische Abbildungssystem 36 hat eine den Aufnahmebereich 14 durchsetzende optische Achse 42. Die Kamera 34 ist auf der dem Aufnahmebereich 14 abgewandten Seite der Trägerstruktur 24 mit den Leiterplatten 22, 22', 22" angeordnet. Sie erfasst einen in dem Aufnahmebereich 14 positionierten Gegenstand 12 in Form eines Brillenglases durch eine Ausnehmung 44 in der Leiterplatte 22 der Trägerstruktur 24.

Die Kamera 34 dient für das Erfassen einer Helligkeitsverteilung, die von dem an der zu vermessenden Fläche 18 reflektierten Licht der Punktlichtquellen 20 auf einem Bildsensor 46 hervorgerufen wird. Das Licht von einer Punktlichtquelle 20 gelangt mit dem Lichtstrahl 48 auf die Fläche 18 des in dem Aufnahmebereich 14 angeordneten Gegenstands 12 in Form eines Brillenglases. An dem Punkt 50 mit den Koordinaten (Xs,Ys,Zs) wird das Licht mit dem Einfallswinkel $\beta_E$ in Bezug auf die Oberflächennormale $\vec{n}$ gemäß dem Reflexionsgesetz unter dem Ausfallswinkel $\beta_A = \beta_E$ reflektiert. Dieses Licht gelangt dann als ein Lichtstrahl 48' in die Kamera 34.

Die Helligkeitsverteilung auf dem Bildsensor 46 enthält damit die Information der Neigung der Tangentialebenen an der zu vermessenden Fläche 18 des Gegenstands 12 in Form eines Brillenglases an denjenigen Stellen, an denen das Licht der Punktlichtquellen 20 so reflektiert wird, dass es die Kamera 34 einfängt.

Das Abbildungssystem 36 der Kamera 34 ist so eingestellt, dass eine auf dem Bildsensor 46 erfasste Helligkeitsverteilung durch die Ausnehmung 44 keine Vignettierung erfährt und die Schärfentiefe so groß ist, dass die Helligkeitsverteilungen für in der Vorrichtung 10 vermessene optisch wirksame Flächen von Gegenständen 12 in Form von Brillengläsern, die unterschiedliche Oberflächentopografien haben, auf dem Bildsensor 46 aufgelöst werden können. Der Bildsensor 46 kann dabei in Kamera 34 entlang einer die Objektivbaugruppe 40 durchsetzenden Verstellachse 52 entsprechend dem Doppelpfeil 54 linearbeweglich verlagert werden.

Die Anordnung der Punktlichtquellen 20 auf der Trägerstruktur 24 in der Vorrichtung 10 gewährleistet, dass die Topografie einer optisch wirksamen Fläche 18 mit guter Auflösung vermessen werden kann, auch wenn diese in Bezug auf die optische Achse 42 des Abbildungssystems 36 der Kamera 34 unter einem Winkel von bis zu 45° geneigt ist. Das Licht der Punktlichtquellen 20 wird dann nämlich so reflektiert, dass es dem Bildsensor 46 in der Kamera 34 durch die Ausnehmung 44 in der Trägerstruktur 24 zugeführt wird.

Die Rechnereinheit 56 ist eine Einrichtung für das Aktivieren von unterschiedlichen Punktlichtquellen 20. Sie dient für das Erfassen der von dem an der optisch wirksamen Fläche 18 reflektierten Licht der Punktlichtquellen 20 auf dem Bildsensor 46 der Kamera 34 hervorgerufenen Helligkeitsverteilung.

Die Fig. 2 zeigt eine solche Helligkeitsverteilung auf dem Bildsensor 46. Die Helligkeitsverteilung weist eine Vielzahl von Leuchtflecke 57 mit einer Zentroide 58 als das geometrische Zentrum der Leuchtflecke auf, deren Ort (x, y) in der Ebene des Bildsensors 46 die Information der Topografie und/oder der Gradienten und/oder der Krümmung einer optisch wirksamen Fläche 18 des Gegenstands 12 enthält.

Für das Auswerten einer mit dem Bildsensor 46 in der Kamera 34 erfassten Helligkeitsverteilung enthält die Rechnereinheit 56 in der Vorrichtung 10 ein Computerprogramm, das in einem Speicher der Rechnereinheit 56 abgespeichert ist. Das Computerprogramm berechnet mit einem Prozessor der Rechnereinheit 56 für einen mit der Kamera 34 auf dem Bildsensor 46 erfassten Lichtstrahl 48', der von einem Punkt 50 auf der optisch wirksamen Fläche 18 des in dem Aufnahmebereich 14 angeordneten Gegenstands 12 ausgeht, anhand von in einem Kalibrierverfahren ermittelten Maschinenparametern der Vorrichtung 10 die Oberflächennormale $\vec{n}$ an diesem Punkt. Durch Integration und Interpolation wird dann in einem Iterationsverfahren unter Rückgriff auf bekannte Koordinaten wenigstens eines Punkts der Fläche 18 und der mit dem Bildsensor 46 erfassten Helligkeitsverteilung die Topografie der Fläche 18 berechnet. Hierfür benutzt das Computerprogramm in der Rechnereinheit 56 Rechenalgorithmen, die von den Apparatekonstanten bzw. Maschinenparametern der Vorrichtung 10 abhängig sind. Das Computerprogramm in der Rechnereinheit 56 ermöglicht dabei auch das Berechnen der lokalen Brechkräfte der optisch wirksamen Fläche 18 aus der berechneten Topografie des Gegenstands 12 sowie das Berechnen der Krümmung und des Gradienten der optisch wirksamen Fläche 18.

Die Fig. 1 zeigt, dass die Anzahl der Punktlichtquellen 20 in einem Raumwinkelelement 60 der Einheitskugel mit den Raumwinkelkoordinaten θ (Polarwinkel), φ (Azimutwinkel) in einem Kugelkoordinatensystem 62, dessen Ursprung in dem Symmetriezentrum 64 der Dreipunktauflage 16 liegt und das einen zu der Kamera 34 weisenden Nordpol 68 hat, mit zunehmendem Polarwinkel θ abnimmt.

Demgegenüber ist die Anzahl der Punktlichtquellen 20 in einem Raumwinkelelelement 60 um das Symmetriezentrum 64 der Dreipunktauflage 16 bei einem gegebenen Polarwinkel $\theta$ von dem Azimutwinkel $\varphi$ im Wesentlichen unabhängig.

Um in der Vorrichtung 10 die Oberflächennormalen an $N^2$ zueinander äquidistant angeordneten Stützstellen 66 einer in dem Aufnahmebereich 14 angeordneten optisch wirksamen Fläche 32 eines Gegenstands 12 mit dem Krümmungsradius R zu bestimmen, ist es erforderlich, dass die Zentralprojektionen zweier benachbarter an der Trägerstruktur 24 aufgenommenen Punktlichtquellen 20 auf eine um das Symmetriezentrum 64 der Dreipunktauflage 16 aufgespannten Hemisphäre 69 mit dem Radius $R_H$ in der Richtung des Polarwinkels $\theta$ den folgenden Abstand d(0) haben:

$$d(\theta) \cong \frac{R_H \cdot 2\theta}{N} \leq \frac{R_H \cdot 4}{N} \sin^{-1} \frac{BF}{2R}$$

Um in der Vorrichtung 10 die Oberflächennormalen an $N^2$ zueinander äquidistant angeordneten Stützstellen 66 einer in dem Aufnahmebereich 14 angeordneten optisch wirksamen Fläche 32 eines Gegenstands 12 mit dem Krümmungsradius R zu bestimmen, ist es erforderlich, dass die Zentralprojektionen zweier benachbarter der an der Trägerstruktur 24 aufgenommenen Punktlichtquellen 20 auf eine um das Symmetriezentrum 64 der Dreipunktauflage 16 aufgespannten Hemisphäre 69 mit dem Radius $R_H$ in der Richtung des Polarwinkels $\theta$ den folgenden Abstand d(0) haben:

$$d(\theta) \cong \frac{R_H \cdot 2\theta}{N} \leq \frac{R_H \cdot 4}{N} \sin^{-1} \frac{BF}{2R}$$

In der Vorrichtung 10 ist die Anordnung der Punktlichtquellen 20 auf eine vorgegebene Anzahl von Stützstellen abgestimmt, indem in dem Inneren der Hemisphäre 69 der Abstand d(0) reduziert ist und nach außen kontinuierlich zunimmt.

In der Vorrichtung 10 sind die Punktlichtquellen 20 von jedem innerhalb des Aufnahmebereichs 14 liegenden Punkt aus gesehen über einen Raumwinkel $\Omega$ verteilt, der folgender Beziehung genügt: $\Omega \geq \Pi$ sr, vorzugsweise $\Omega \geq 1.8$ $\Pi$ sr.

In einer alternativen, modifizierten Ausführungsform der Vorrichtung 10 ist der Aufnahmebereich 14 in Bezug auf die Anordnung der an der Trägerstruktur 19 aufgenommenen Punktlichtquellen 20 verlagerbar ausgeführt. Auf diese Weise ist es möglich, den Raumwinkel $\Omega$ zu variieren, über den die Punktlichtquellen 20 von innerhalb des Aufnahmebereichs 14 liegenden Punkten aus gesehen verteilt sind.

Um die Topografie der optisch wirksamen Fläche 18 eines Gegenstands 12 in Form eines Brillenglases mittels des Computerprogramms in der Rechnereinheit 56 genau berechnen zu können, müssen zu der Vorrichtung 10 die nachfolgend aufgeführten Vorrichtungsgrößen in Form von Maschinenparametern, d. h. Apparatekonstanten der Vorrichtung 10 bekannt sein:

- Größe der lichtempfindlichen Fläche des Bildsensors 46 und der Abstand der lichtempfindlichen Sensorpixel;

- Maßstab der optischen Abbildung der Kamera 34;

- räumliche Position und/oder Lage des Bildsensors 46 der Kamera 34 in Bezug auf die optische Achse 42 des optischen Abbildungssystems 36 der Kamera 34;

- Verzeichnung des optischen Abbildungssystems 36 der Kamera 34;

- laterale Verschiebung der Kamera;

- Position, d. h. die Koordinaten einer jeden Punktlichtquelle 20 in einem zu dem Bildsensor 46 der Kamera 34 referenzierten vorrichtungsfesten Koordinatensystem 78; und

- Koordinaten des Zentrums und Radius einer kugelförmigen Anlage in einem zu dem Bildsensor 46 der Kamera 34 referenzierten vorrichtungsfesten Koordinatensystem 78.

Die vorstehenden Apparatekonstanten können auch bei Vorrichtungen 10, die eine grundsätzlich gleiche Bauform haben, aufgrund von unterschiedlichen Beschaffenheiten einzelner darin eingesetzter Baugruppen und aufgrund von Fertigungstoleranzen Werte haben, die in einer jeden einzelnen Vorrichtung 10 unterschiedlich sind.

Für eine in der Fig. 1 gezeigte Vorrichtung 10 für das Vermessen der Topografie eines Gegenstands 12 in Form eines Brillenglases müssen deshalb diese Apparatekonstanten in einem Kalibrierverfahren bestimmt werden, bevor damit die Topografie und/oder der Gradient und/oder die Krümmung einer optisch wirksamen Fläche des Gegenstands 12 entsprechend genau vermessen werden kann.

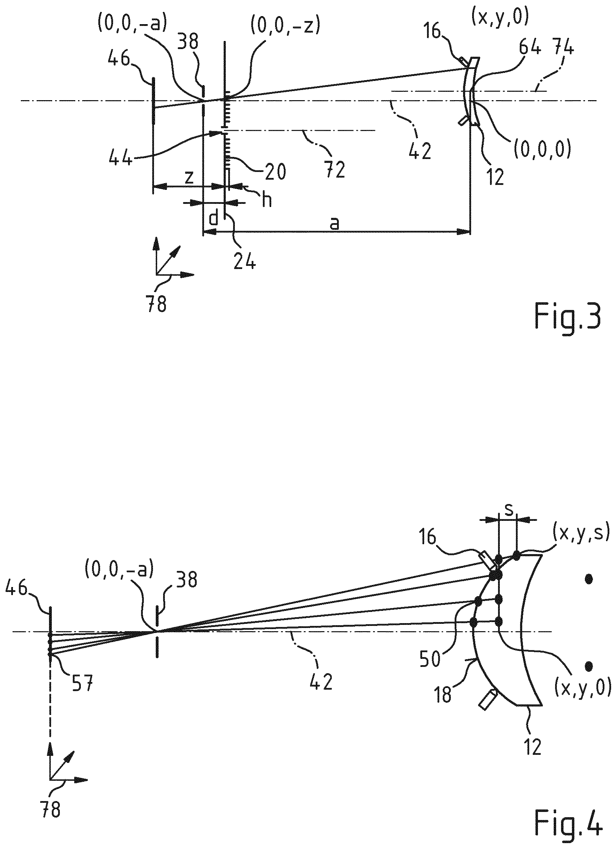

Die Fig. 3 zeigt den Einfluss von Fertigungstoleranzen auf unterschiedliche Apparatekonstanten der Vorrichtung 10. Die optische Achse 42 des optischen Abbildungssystems 36 der Kamera 34 ist auf einer mikroskopischen Skala gegenüber dem Zentrum 70 des Bildsensors 46 versetzt angeordnet. Die Symmetrieachse 72 der Trägerstruktur 24 ist im Allgemeinen von der optischen Achse 42 des optischen Abbildungssystems 36 der Kamera 34 und der Symmetrieachse 74 der Dreipunktauflage 16 verschieden. Die Punktlichtquellen 20 senden das Licht in dem Abstand h von der Oberfläche einer Leiterplatte 22 aus. Die Leiterplatte 22 mit der Ausnehmung 44 ist in dem Abstand d von der Blende 38 des optischen Abbildungssystems 36 der Kamera 34 angeordnet. Der Bildsensor 46 ist in dem Abstand z von der Blende 38 des optischen Abbildungssystems 36 der Kamera 34 positioniert. Das Symmetriezentrum 64 der Dreipunktauflage 16 hat den Abstand a von der Ebene der Blende 38 des optischen Abbildungssystems 36 der Kamera 34.

Die genaue Kenntnis der Apparatekonstanten ist erforderlich, damit mit der Vorrichtung für das Vermessen der Topografie eines Gegenstands 12 in Form eines Brillenglases eine hohe Messgenauigkeit erzielt werden kann.

So ist die Kenntnis der Größe der lichtempfindlichen Fläche des Bildsensors 46 und der Abstand der lichtempfindlichen Sensorpixel zueinander erforderlich, um in Kenntnis des Abbildungsmaßstabs des Abbildungssystems 36 der Kamera 34 auf die Position und/oder die Lage eines Punkts 50 auf der optisch wirksamen Fläche 18 eines Gegenstands 12 in Form eines Brillenglases schließen zu können, an dem ein auf den Gegenstand 12 auftreffender Lichtstrahl 48 reflektiert wird.

Die Kenntnis der Verzeichnung des optischen Abbildungssystems 36 der Kamera 34 ist erforderlich, um zu den mit dem Bildsensor 46 erfassten Lichtpunkten einen Abbildungsmaßstab angeben zu können.

Die Kenntnis der Position, d. h. die Koordinaten einer kugelförmigen Anlage in einem zu dem Bildsensor 46 der Kamera 34 referenzierten vorrichtungsfesten Koordinatensystem 78 ist erforderlich, um die Koordinaten eines Punkts 50 auf der optisch wirksamen Fläche 18 des Gegenstands 12 in Form eines Brillenglases angeben zu können, wenn der Gegenstand 12 in der Dreipunktauflage 16 aufgenommen ist.

Die Kenntnis der Position, d. h. die Koordinaten einer jeden Punktlichtquelle 20 in einem zu dem Bildsensor 46 der Kamera 34 referenzierten vorrichtungsfesten Koordinatensystem 78 und die Kenntnis der räumliche Position und/oder Lage des Bildsensors 46 der Kamera 34 in Bezug auf die optische Achse 42 des optischen Abbildungssystems 36 der Kamera 34 ist erforderlich, um auf die genaue Position und/oder Lage von Reflexpunkten auf der optisch wirksamen Fläche 18 eines Gegenstandes in Form eines Brillenglases mittels Triangulation schließen zu können.

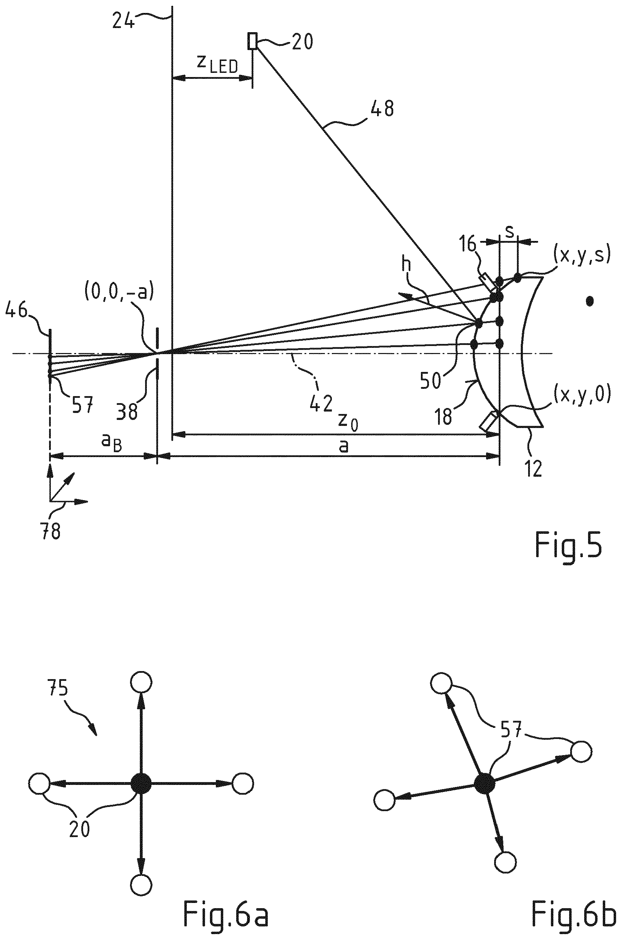

Das genaue Berechnen der Topografie der optisch wirksamen Fläche 18 eines Gegenstands 12 in Form eines Brillenglases wird anhand der Fig. 4 und Fig. 5 nachfolgend erläutert.

Das Computerprogramm in der Rechnereinheit 56 der Vorrichtung macht für das Berechnen der Topografie der optisch wirksamen Fläche 18 des Gegenstands 12 in Form eines Brillenglases von einem Algorithmus Gebrauch, mit dem folgende Schritte durchgeführt werden:

| | |
|---|---|
| Schritt 1: | Bestimmen der Zentroide 58 der einzelnen Leuchtflecke 57 in einer Helligkeitsverteilung auf der lichtempfindlichen Fläche des Bildsensors 46. |
| Schritt 2: | Zuordnen der Zentroide 58 eines Leuchtflecks 57 in einer Helligkeitsverteilung auf der lichtempfindlichen Fläche des Bildsensors 46 zu einer bestimmten Punktlichtquelle 20. |
| Schritt 3: | Bestimmen des Punkts 50 der Reflexion auf der optisch wirksamen Fläche 18 des Gegenstands 12 für eine jede Zentroide 58. |
| Schritt 4: | Berechnen der Flächennormalen $\vec{n}$ auf der optisch wirksamen Fläche 18 des Gegenstands 12 für eine jede Zentroide 58. |
| Schritt 5: | Berechnen der Topografie, z. B. als Form und/oder Pfeilhöhen s der optisch wirksamen Fläche 18 durch Integration der Flächennormalen $\vec{n}$, d.h. durch Integration der durch die Flächennormalen $\vec{n}$ bestimmten Richtungsableitungen der Fläche 18. |
| Schritt 6: | Berechnen der lokalen Krümmungen der optisch wirksamen Fläche 18 des Gegenstands 12 durch Differenzieren der Flächennormalen $\vec{n}$, d.h. durch Ableiten der Einträge des Vektors der Flächennormalen $\vec{n}$. |
| Schritte nach Schritt 6: | Iteratives Wiederholen der Schritte 4 bis 6 bis zu einem Konvergenzkriterium. |

Das Konvergenzkriterium bedeutet, dass die iterativen Schritte 4 bis 6 so lange wiederholt werden, bis eine Normdifferenz der in zwei aufeinanderfolgenden Schritten berechneten Topografien kleiner ist als eine vorgegebene Toleranz.

Um die Position und/oder die Lage des mit der Kamera 34 erfassten Bilds der einzelnen Punktlichtquellen 20 zu bestimmen, werden die Zentroiden 58 als die Schwerpunkte der Intensität der Intentsitätsverteilungen eines einzelnen von dem Licht einer Punktlichtquelle 20 auf dem Bildsensor 46 hervorgerufenen Leuchtflecks 57 berechnet. Dabei ist ein Leuchtfleck 57 durch eine Pixelnachbarschaft definiert, die durch einen manuellen oder automatisch berechneten Filter gegeben ist. Die Schwerpunktsberechnung erfolgt dann durch eine Propagation jeder (x, y)-Position auf das nächstgelegene Zentrum unter Berücksichtigung eines Gradienten-Aufstiegs oder einer Mean Shift. Um die hierfür erforderliche Rechenzeit zu verkürzen, wird das Signal des Bildsensors 46 gefiltert, um das Bildsignal des Bildsensors 46 von störendem Rauschen und unbeachtlichen Hintergrundsignalen zu befreien. Dies führt dann auf die (X, Y) Koordinaten der Bilder der einzelnen Punktlichtquellen 20 in der Ebene der lichtempfindlichen Fläche des Bildsensors 46.

Die Schätzung dieser Koordinaten kann dabei subpixelgenau erfolgen. Bei 2000 Punktlichtquellen und einer Kamera mit 4 MPixeln ergibt sich so eine vorteilhafte Datenreduktion von etwa 4.000.000/4000 = 1000/1. Nach dem Schätzen der Zentroide aus den Bilddaten erfolgt eine Zuordnung der (X, Y)-Position zu einer Punktlichtquelle 20.

Aufgrund der Reflektion an der optisch wirksamen Fläche 18 des Gegenstands 12 ist die von den Punktlichtquellen 20 auf der lichtempfindlichen Fläche des Bildsensors 46 hervorgerufene Helligkeitsverteilung im allgemeinen verzerrt. Allerdings bleibt die Position und/oder die Lage der Leuchtflecke 57 in einem durch die Anordnung der Punktlichtquellen 20 an der Trägerstruktur 24 definierten Gitterverbund erhalten. Indem der Gegenstand 12 in der Vorrichtung 10 mit einer speziellen Sequenz bzw. Gruppe von Punktlichtquellen 20 beleuchtet wird, die von einzelnen Punktlichtquellen 20 oder auch einem Ring von Punktlichtquellen 20 gebildet werden, die in Bezug auf die Kamera 34 nächstliegend sind, wird das direkte Zuordnen mindestens einer Intensitätsverteilung auf der lichtempfindlichen Fläche des Bildsensors 46 zu einer bestimmten Punktlichtquelle 20 ermöglicht. Ausgehend von dieser Punktlichtquelle 20 werden dann die folgenden Punktlichtquellen 20 aufgrund ihrer Nachbarschaftsbeziehungen zugeordnet, so dass sich eine Ursprungsliste ergibt.

Die Fig. 6a und Fig. 6b erläutert das Zuordnen von einzelnen Leuchtflecke 57 auf dem Bildsensor 46 unter Rückgriff auf die diesen Leuchtflecke 57 zugrundeliegenden Punktlichtquellen 20 mit dem Computerprogramm in der Rechnereinheit 56. Dieses Zuordnen erfolgt schrittweise. Dabei macht das Computerprogramm in einem jeden Zuordnungsschritt von einer Liste von Punktlichtquellen 20 Gebrauch, die aktiv sind und die sich in einem bekannten Gitterverbund befinden. In Kenntnis des in der Fig. 6a gezeigten Gitterverbunds 75 werden die in der Fig. 6b gezeigten, auf dem Bildsensor 46 beobachteten Leuchtflecke 57 von benachbarte Punktlichtquellen 20 einander zugeordnet. Dies kann z. B. initiiert anhand einer sogenannten Ursprungsliste erfolgen. Alternativ hierzu ist es aber auch möglich, die Zuordnung anhand einer Liste von Punktlichtquellen 20 vorzunehmen, die bereits zugeordnet wurden und die ebenfalls mit der Ursprungsliste initiiert sind. Nach dem Zuordnungsschritt der Nachbarn werden dann alle neu zugeordneten Punktlichtquellen 20 in die Liste der aktiven Punktlichtquellen 20 übernommen, wobei die alten Einträge dieser Liste in die Liste der bereits zugeordneten Punktlichtquellen 20 kopiert werden. Dabei wird darauf geachtet, dass es keine gemeinsamen Punktlichtquellen 20 in den beiden Listen gibt. Das führt zu einem räumlichen Ausbreiten der Zuordnung auf dem zweidimensionalen Gitter der Punktlichtquellen 20 und erlaubt sogar das Zuordnen von Punktlichtquellen 20, wenn sich an einzelne Gitterpunkte des Gitters keine Punktlichtquellen befinden.

Für einen Leuchtfleck 57, der einer aktiven Punktlichtquelle 20 zugeordnet wird, müssen die nächsten Nachbarn den benachbarten Punktlichtquellen 20 entsprechen. Hierzu wird, wie die Fig. 6a zeigt, als eine Nachbarschaftsbeziehung ein einfacher Euklidische Abstand zugrunde gelegt. Die jeweils aktive Punktlichtquelle 20 bildet dann den Ursprung eines lokalen Koordinatensystems. Einem jeden Nachbarpunkt entspricht hier ein Vektor, dem ein entsprechender Vektor der Referenz zugeordnet werden muss. Diese Zuordnung erfolgt durch Minimierung der Summe der Vektor-Skalarprodukte, was einer minimalen Gesamt-Winkelverzerrung der Zuordnung entspricht. Diese Minimierung kann z. B. durch Anwenden der sogenannten ungarischen Methode anhand des Kuhn-Munkres-Algorithmus erfolgen.

Alternativ hierzu ist es aber auch möglich, die entsprechende Zuordnung von Lichtflecken auf dem Bildsensor 46 und Punktlichtquellen 20 durch die Aufnahme von Bildsequenzen durchzuführen. Dabei werden Punktlichtquellen 20 in Gruppen oder einzeln angesteuert und es werden mittels des Bildsensors 46 eine Reihe von Bildern aufgenommen. Die Zuordnung erfolgt dann durch Analyse der entsprechenden Bildsequenz. Dabei können alle Punktlichtquellen 20 entweder komplett durch ihren Sequenzcode, d. h. z. B. An-Aus durchnummeriert werden. Es ist aber auch möglich, dass hierzu die Punktlichtquellen nur lokal mit einem Code versehen werden. Dies ist dann eine Abwandlung des vorstehend beschriebenen Algorithmus, der die Punktlichtquellen 20 zuordnet. Dabei ist zu bemerken, dass die entsprechende Vorschrift für das lokale Zuordnen räumlich oder zeitlich veränderbar sein kann.

Für eine eindeutige globale Zuordnung sämtlicher möglicher Leuchtflecke zu allen Punktlichtquellen 20 in der Vorrichtung 10 sind

$\log_2$ [Anzahl der Punktlichtquellen]

Einzelbilder in einer Sequenz erforderlich. Enthält die Vorrichtung 10 für das Vermessen der Topografie z. B. 48 Punktlichtquellen 20, so werden für eine globale Zuordnung elf Einzelbilder und für eine lokale Zuordnung drei Einzelbilder benötigt.

Unter Berücksichtigung des Abbildungsmaßstabs und der optionalen Verzeichniskorrektur wird dann mit dem Computerprogramm der Rechnereinheit 56 für eine jede Zentroide 58 der einfallende Lichtstrahl i berechnet. Dabei wird nach Berücksichtigung der Verzeichnung die Optik des Abbildungssystems 36 der Kamera 34 als dicke Linse modelliert. Der einfallende Lichtstrahl wird dann wie folgt beschrieben:

$$\vec{i} = \vec{i}_0 + m \cdot \vec{i}_n = \begin{pmatrix} 0 \\ 0 \\ -a \end{pmatrix} + m \begin{pmatrix} -x_c \\ -y_c \\ as \end{pmatrix}$$

Hier ist die optisch wirksame Fläche 18 des Gegenstands 12 in Form eines Brillenglases als eine numerische Modellfläche gegeben, die entweder aus der vorhergehenden Analyse-iteration oder durch Initiation als eine Ebene definiert ist. Der Ort der Reflexion ist daher durch den Schnitt des Strahls mit dieser Fläche gegeben und wird numerisch durch eine Optimierung nach dem Parameter m bestimmt. Dabei wird der euklidische Abstand des Strahlpunktes i(m) zu der Fläche minimiert. Der nächste Punkt der Fläche wird dann durch eine nächste Nachbarn Interpolation berechnet.

Aus den Reflexionsgleichungen ergibt sich eine Flächennormale $\vec{n}$ der Reflektierenden Fläche wie folgt:

$$\vec{n} = \frac{\vec{r}_n - \vec{i}_n}{|\vec{r}_n - \vec{i}_n|}$$

Dabei ist $\vec{r}_n$ die Richtung, die eine Punktlichtquelle 20 und den Punkt 50 auf der optisch wirksamen Fläche 18 des Gegenstands 12 verbindet, auf den ein einfallender Strahl auftrifft, wobei gilt:

$$\vec{r} = \begin{pmatrix} x_s \\ y_s \\ z(x_s, y_s) \end{pmatrix} + m \cdot \vec{r}_n$$

und

$$\vec{i} = \vec{i}_0 + m \cdot \vec{i}_n = \begin{pmatrix} 0 \\ 0 \\ -a \end{pmatrix} + m \begin{pmatrix} -x_c \\ -y_c \\ as \end{pmatrix}$$

Indem die Fläche des Prüflings als eine Flächenfunktion z(xs,ys) parametrisiert wird, ergibt sich für die Flächennormalen $\vec{n}$:

$$\vec{n} = \begin{pmatrix} -\dfrac{\partial x}{\partial z} \\ -\dfrac{\partial y}{\partial z} \\ 1 \end{pmatrix} = \begin{pmatrix} -\partial_z x \\ -\partial_z y \\ 1 \end{pmatrix}$$

Diese Gleichung wird dann direkt nach den Ableitungen $\partial_z x$ und $\partial_z y$ der optisch wirksamen Fläche 18 des Gegenstands 12 in Form eines Brillenglases, d. h. der Oberfläche des Gegenstands aufgelöst. Damit werden die Ableitungen der Oberfläche an den Stellen (xs, ys) erhalten, die aufgrund der Verzerrung der Oberfläche auf dem Gegenstand 12 im Regelfall allerdings unregelmäßig verteilt sind. Zur Integration werden die Ableitungen dann zunächst auf ein regelmäßiges Polargitter interpoliert, was das Verfahren robust gegen das Fehlen einzelner Punkte macht. Auf dem Polargitter werden die x, y-Ableitungen darauf zu polaren Ableitungen, d. h. Ableitungen nach Radius r und Winkel $\varphi$ entsprechend der Kettenregel der Differentialrechnung umgerechnet. Die numerische, polare Ableitung auf dem polaren Gitter wird dann durch eine Ableitungsmatrix A beschrieben, was der sogenannten N-punkt Finite-Differenzen-Methode entspricht. Dabei werden in Umsetzung von Von-Neumann-Randbedingungen die Randpunkte als einseitige Ableitung modelliert. Neben der Ableitungsmatrix wird hier eine Nebenbedingungsmatrix C definiert, welche die gemessene Höhe des Prüflings an den Auflagepunkten beschreibt sowie die polare Bedingung z(0,φ)=z(0). Die Topografie der Oberfläche z ergibt sich dann aus der Lösung des linearen Gleichungssystems:

$$\begin{pmatrix} A^T A & C^T \\ C & 1 \end{pmatrix} z = \begin{pmatrix} \partial^2{}_r z + \partial^2{}_\varphi z \\ z(r = 0) \\ z(\text{Auflage}) \end{pmatrix}$$

Alternativ kann die Integration auch durch den Fit von lokalen Basisfunktionen erfolgen. Dabei wird die Fläche als eine Linearkombination von Basisfunktionen modelliert, z. B. als eine Linearkombination von biharmonischen Splines.

Die Ableitung dieser Linearkombination ist dann die Linearkombination der Ableitungen der Basisfunktionen. Das führt zu einem linearen Gleichungssystem, das sich nach einem Gewichten der Linearkombination lösen lässt. Die Nebenbedingung der Anlage ist auch hier wie oben beschrieben zu berücksichtigen. Die finale Fläche ist schließlich die Linearkombination der ermittelten Gewichte mit den Basisfunktionen.

Die lokalen Krümmungen der Oberfläche werden dann durch die differentialgeometrischen Beziehungen direkt aus den Oberflächenneigungen $\partial_z x$ und $\partial_z y$ berechnet. Zum Beispiel die Gaußkrümmung K:

$$K = \frac{\partial^2{}_x z \cdot \partial^2{}_y z - \partial^2{}_{xy} z}{(1 + \partial_x z^2 + \partial_y z^2)^2}$$

Die Topografie der optisch wirksamen Fläche 18 des Gegenstands 12 in Form eines Brillenglases wird schließlich in einem iterativen Verfahren ermittelt. Nach der Initialisierung von z mit einer Standardform, z. B. einer Ebene oder einer Sphäre mit einem vordefinierten Radius wird die Ableitung berechnet und es wird die Topografie durch eine Integration neu bestimmt. Diese Schritte werden solange wiederholt, bis sich die bestimmte Topografie weniger als ein Abbruchkriterium ändert. Die Konvergenz des Verfahrens ist dadurch gewährleistet, dass der Abstand a der Hauptebenen des Gegenstands 12 in Form eines Brillenglases und des Abbildungssystems 36 der Kamera 34 groß ist, so dass vorliegend der Banachsche Fixpunktsatz gilt. Eine genaue Berechnung der Topografie der optisch wirksamen Fläche 18 eines Gegenstands 12 in der Rechnereinheit 56 erfordert die genaue Kenntnis der Position eines Punkts auf der Oberfläche des Prüflings in einem zu dem Bildsensor 46 der Kamera 34 referenzierten Koordinatensystem.

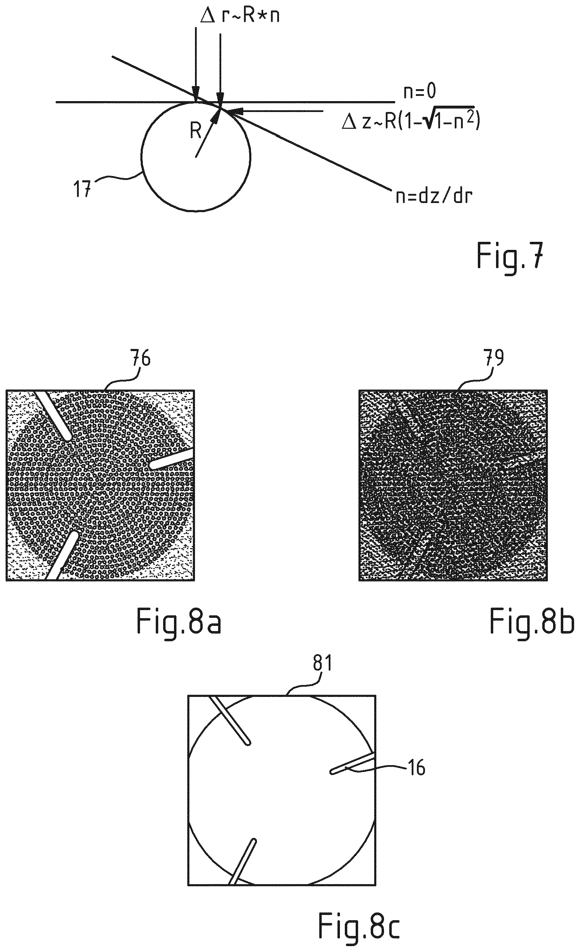

Wie anhand von Fig. 7 nachfolgend erläutert ist, werden hierzu die Anlagepunkte des Gegenstands 12 in Form eines Brillenglases an eine kugelförmige Anlage 17 der Dreipunktauflage 16 in der Rechnereinheit 56 rechnerisch wie folgt ermittelt:

Die optisch wirksamen Fläche 18 des Gegenstands 12 wird in einem ersten Schritt in dem Bereich einer kugelförmigen Anlage der Dreipunktauflage 16 lokal als eine sphärische Fläche modelliert.

Darauf wird der Berührungspunkt dieser sphärischen Fläche mit der sphärischen Fläche der entsprechenden kugelförmigen Anlage anhand eines bekannten Radius und anhand eines bekannten Zentrums der kugelförmigen Anlage bestimmt.

Der Maschinenparameter der Größe der lichtempfindlichen Fläche des Bildsensors 46 und der Abstand der darauf angeordneten lichtempfindlichen Sensorpixel ergibt sich aus den üblichen Herstellerinformationen zu Bildsensoren bzw. Bildsensoren in einer Kamera.

Um die folgenden Maschinenparameter bzw. Apparatekonstanten zu ermitteln:

- Maßstab der optischen Abbildung der Kamera 34;

- räumliche Position und/oder Lage des Bildsensors 46 der Kamera 34 in Bezug auf die optische Achse 42 des optischen Abbildungssystems 36 der Kamera 34;

- Verzeichnung des optischen Abbildungssystems 36 der Kamera 34;

- laterale Verschiebung des Bildsensors 46 der Kamera 34;

- Position, d. h. die Koordinaten einer jeden Punktlichtquelle 20 in einem zu dem Bildsensor 46 der Kamera 34 referenzierten vorrichtungsfesten Koordinatensystem 78; und

- Koordinaten des Zentrums und Radius einer kugelförmigen Anlage in einem zu dem Bildsensor 46 der Kamera 34 referenzierten vorrichtungsfesten Koordinatensystem 78;

wird die Vorrichtung 10 in einem Kalibriermodus betrieben.

Im Einzelnen werden hierfür folgende Schritte durchgeführt:

## Maßstab

Für das Ermitteln des Maßstabs der optischen Abbildung der Kamera 34 wird mit der Vorrichtung 10 die in der Fig. 8a gezeigte Kalibrationsscheibe in Form eines scheibenförmigen Testobjekts 76 vermessen. Dieses Testobjekt 76 ist eine geschwärzte Metallplatte, in die ein definiertes, genau bekanntes Muster eingebacht ist. Für das Vermessen wird das Testobjekt 76 in die Dreipunktauflage 16 der Vorrichtung 10 eingelegt. Dann werden mit der Kamera 34 unterschiedliche Bilder des Testobjekts 76 aufgenommen, bei denen die Position des Bildsensors 46 der Kamera 34 in der Richtung der Verstellachse 52 entsprechend dem Doppelpfeil 54 verlagert wird. Entsprechend der Position des Bildsensors 46 der Kamera 34 verändert sich dabei das Bild des Musters des Testobjekts 76 auf dem Bildsensor 46 aufgrund der mit dem Verschieben verbundenen Änderung des Abbildungsmaßstabs.

## Verzeichnung

Für das Ermitteln der Verzeichnung des optischen Abbildungssystems 36 der Kamera 34 wird aus bekannten Informationen zu der Größe der lichtempfindlichen Fläche des Bildsensors 46 und dem Abstand der darauf angeordneten lichtempfindlichen Sensorpixel der Abbildungsmaßstab, die Bildweite und die Objektweite für unterschiedliche Positionen des Bildsensors 46 entlang von dessen Verstellachse 52 bestimmt.

Alternativ oder zusätzlich ist es auch möglich, lokale Abweichungen zwischen dem Bild des scheibenförmigen Testobjekts 76 und der bekannten, tatsächlichen Form des scheibenförmigen Testobjekts 76 rechnerisch auszuwerten, um auf diese Weise eine Verzeichnungskorrektur für die Abbildungsoptik zu bestimmen, indem für ein jedes Sensorpixel des Bildsensors 46 der Kamera 34 ein Korrekturvektor berechnet wird. Dieser Korrekturvektor ermöglicht es dann, aus den Bilddaten zu einem mit der Kamera 34 aufgenommenen Gegenstand 12 auf entsprechend reale Raumkoordinaten zu schließen.

Darüber hinaus ist es alternativ oder zusätzlich auch möglich, aus Aufnahmen des scheibenförmigen Testobjekts 76 mit der Kamera 34 bei unterschiedlichen Positionen des Bildsensors 46 entlang von dessen Verstellachse 52 auf die exakte Position des Bildsensors 46 relativ zu der optischen Achse 42 des Abbildungssystems 36 der Kamera 34 zu schließen.

## Laterale Verschiebung des Bildsensors, Vergrößerung und Verzeichnung

Für das Ermitteln der lateralen Verschiebung des Bildsensors 46 der Kamera 34 relativ zu der optischen Achse 42 werden wiederum mehrere Bilder des scheibenförmigen Testobjekts 76 bei unterschiedlichen Positionen des Bildsensors 46 entlang der Verstellachse 52 erfasst. Anhand einer Regression beobachteter einander entsprechender Punkte, Spots oder Bildbereiche zu der realen Verschiebung des Bildsensors 46 wird dann direkt die optische Achse 42 des optischen Abbildungssystems 36 der Kamera 34, der Vergrößerungsmaßstab und die Verzeichnung des optischen Abbildungssystems 36 bestimmt. Dabei wird ausgenutzt, dass wenn die Verstellachse 52 des Bildsensors 46 zu der optischen Achse 42 der Kamera 34 exakt parallel ist, aus einem Bild extrahierte, einander entsprechende Punkte linear um einen definierten Punkt skalieren, der dem Schnitt der optischen Achse 42 mit der Ebene des Bildsensors 46 entspricht.

Zu bemerken ist, dass die Verstellachse 52 des Bildsensors 46 der Kamera 34 mit der optische Achse 42 des optischen Abbildungssystems 36 der Kamera 34 nicht zwingend exakt zusammenfällt. Dieser Umstand führt bei einer Verlagerung des Bildsensors 46 und dem damit verbundenen Defokus zu einer x, y-Drift der Leuchtflecke 57 der Helligkeitsverteilung in der Ebene des Bildsensors 46. Diese Drift kann allerdings durch Vermessen eines sogenannten Skalierpunkts der Vorrichtung 10 in Form des Scheitelpunkts oder des Umkreismittelpunkts der Dreipunktauflage 16 bestimmt werden. Der vorstehend angeführte Skalierpunkt zeichnet sich dadurch aus, dass bei Vermessen von sphärischen Gegenständen in der Vorrichtung 10, die eine unterschiedliche Krümmung haben, eine gleiche Fokuseinstellung des optischen Abbildungssystems 36 der Kamera 34 bewirkt, dass die Leuchtflecke 57 der Helligkeitsverteilung immer radialsymmetrisch um diesen Punkt skalieren. Durch eine entsprechende Regression von Bilddaten des Bildsensors 46 ist es deshalb in gleicher Weise wie bei dem vorstehend beschriebenen Ermitteln des Abbildungsmaßstabs möglich, den gesuchten Skalierpunkt zu bestimmen.

Ein Wandern des Skalierpunkts ist dabei eindeutig auf eine Drift der Sensorebene zurückführbar. Infolge dessen kann die mit der Verlagerung des Bildsensors 46 einhergehende Drift als eine Funktion der Position des Bildsensors

46 auf der Verstellachse 52, d. h. der Z-Koordinate ermittelt und dann kompensiert werden. Der Skalierpunkt wird dabei als ein Grenzwert in Form des Mittelpunkts des Musters der Punktlichtquellen 20 in dem mit der Kamera 34 hypothetisch erfassten Bild bestimmt, das einer in der Vorrichtung 10 vermessenen Sphäre mit dem Radius 0 entspricht.

Die vorstehend erläuterten Apparatekonstanten der Vorrichtung 10 werden in der Rechnereinheit 56 bevorzugt mit einem Optimierungsverfahren bestimmt, das auf dem Vermessen von mehreren sphärischen Testkörpern basiert, die unterschiedliche Radien haben.

Position einer jeden Punktlichtquelle

Das Ermitteln der Position einer jeden Punktlichtquelle 20 in der Vorrichtung 10 erfolgt mittels Auswerten von mit der Kamera 34 erfassten Bildern mit einer Helligkeitsverteilung 79 von Reflexionen des Lichts der Punktlichtquellen 20 an Testkörpern mit einer bekannten Geometrie anhand eines Optimierungsverfahrens.

Die Fig. 8b zeigt z. B. eine mit dem Bildsensor 46 der Vorrichtung 10 erfasste Helligkeitsverteilung 79 von Reflexionen des Lichts der Punktlichtquellen 20 an einer Sphäre für das Bestimmen von Maschinenparametern bzw. Apparatekonstanten der Vorrichtung 10. Hier wird davon Gebrauch gemacht, dass beim Vermessen von Testkörpern mit unterschiedlichen Radien die Position der Punktlichtquellen 20, deren Licht die mit dem Bildsensor 46 erfassten Helligkeitsverteilungen erzeugt, für die unterschiedlichen Testkörper jeweils gleich ist. Diese Randbedingung wird in dem Optimierungsverfahren dazu benutzt, aus den Helligkeitsverteilungen von unterschiedlichen Testkörpern optimierte Positionen der Punktlichtquellen 20 in der Vorrichtung 10 zu berechnen.

In einer modifizierten Ausgestaltung dieses Optimierungsverfahrens wird die Randbedingung der Position der Punktlichtquellen 20 um weitere Randbedingungen ergänzt, mit denen die Geometrie der Trägerstruktur 24 für die Punktlichtquellen 20 berücksichtigt wird.

Ist z. B. die Trägerstruktur 24 eine Hemisphäre, so gilt, dass sämtliche Punktlichtquellen 20 auf einer Kugelschale liegen. Ist die Trägerstruktur 24 eine Hemisphäre mit Formfehlern, so hat das zur Folge, dass sämtliche Punktlichtquellen 20 auf einer ellipsoiden Oberfläche bzw. einer sphärischen Oberfläche mit Störkonturen liegen, die sich z. B. durch Zernike-Polynome beschreiben lassen.

Ist schließlich die Trägerstruktur 24 ein Polyeder und sind die Punklichtquellen 20 auf einer Leiterplatte angeordnete LEDs, so bedeutet das, dass sich die Punktlichtquellen 20 einer entsprechende Gruppen von Punktlichtquellen 20 auf einer gemeinsamen Ebene befinden, wobei ausgenutzt werden kann, dass das Fertigungsverfahren der SMD Bestückung von Leiterplatten das Positionieren von LEDs mit maximalen Abweichungen von < 0.1 mm ermöglicht. Ist das Polyeder z. B. aus 16 Leiterplatten (PCBs) mit je fünf Freiheitsgeraden und drei Auflagepunkten hergestellt, so müssen dann mit dem entsprechende Optimierungsverfahren nur noch 89 freie Parameter bestimmt werden, d. h. z. B. im Fall von 2000 LEDs rund 6000 Freiheitsgrade.

Koordinaten des Zentrums und Radius einer kugelförmigen Anlage

Zur Bestimmung der Auflageparameter, d. h. der Koordinaten der Zentren der Auflagekugeln in einem vorrichtungsfesten Koordinatensystem in Form des Koordinatensystems des Bildsensors 46 der Kamera 34 wird zunächst mit der Kamera 34 ein Bild 81 einer in der Dreipunktauflage 16 der Vorrichtung 10 angeordneten weißen Scheibe aufgenommen, wie es die Fig. 8c zeigt. Die weiße Scheibe wird dabei mit allen Punktlichtquellen 20 beleuchtet. Das Zentrum und der Radius der kugelförmigen Auflagen der Dreipunktauflage 16 in der Vorrichtung 10 wird dann rechnerisch mittels Bildverarbeitung bestimmt. Das Bild 81 der entsprechenden Aufnahme enthält die hierzu erforderliche Information. Die kugelförmigen Anlagen 17 werden in dem Bild 81 unter perspektivischen Projektionen auf Ellipsen abgebildet, aus denen dann anhand des bekannten Radius und des bekannten Abbildungsmaßstabs die Parameter des Kugelzentrums bestimmt werden.

Es ist auch möglich, die Kugelzentren in x, y, z oder nur in z als freie Parameter in das vorstehend beschriebene Optimierungsverfahren für das Ermitteln der Position einer jeden Punktlichtquelle 20 mit aufzunehmen. Weil diese Maßnahme die Anzahl der Freiheitsgrade des entsprechenden Optimierungsverfahrens erhöht, führt dies dazu, dass das Verfahren etwas langsamer konvergiert.

Zu bemerken ist allerdings, dass mit dem vorstehend beschriebenen Optimierungsverfahren die Apparatekonstanten bzw. Maschinenparameter der Vorrichtung 10 in Form der Position, d. h. der Koordinaten einer kugelförmigen Anlage in einem zu dem Bildsensor 46 der Kamera 34 referenzierten Koordinatensystem 78 und der Position, d. h. der Koordinaten einer jeden Punktlichtquelle 20 in einem zu dem Bildsensor 46 der Kamera 34 referenzierten Koordinatensystem 78 sowie der räumlichen Position und/oder Lage des Bildsensors 46 der Kamera 34 in Bezug auf die optische Achse 42 des optischen Abbildungssystems 36 der Kamera 34 im Grundsatz auch mit zwei unterschiedlichen Testkörpern bestimmt werden können.

Zu bemerken ist außerdem, dass eine Möglichkeit für das Ermitteln der Auflagepunkte auch darin besteht, die Dreipunktauflage 16 in der Vorrichtung 10 mit einer Koordinatenmessmaschine zu vermessen. Hierzu wird das gesamte Messsystem auf der Grundplatte eines Koordinatenmessgerätes platziert. So können die Koordinaten der Auflagepunkte so wie die Lagen der Ebenen des Polyeders bzw. die Lage und/oder Position der Hemisphäre bestimmt werden.

In einem vereinfachten Verfahren wird auf einer Koordinatenmessmaschine nur die Dreipunktauflage 16 vermessen. So ist die relative Position und/oder Lage der drei Auflagepunkte zueinander bekannt.

Alle relativen Größen, welche vorher als sicher und stabil mittels externen Messverfahren bestimmt werden, reduzieren die Anzahl der offenen Parameter in den Optimierungsverfahren und erhöhen somit deren Stabilität.

Außerdem ist zu bemerken, dass entsprechende Auflagepunkte in einem Optimierungsverfahren unter Verwendung eines bekannten Prüflings bestimmt werden können.

Darüber hinaus ist zu bemerken, dass die gesuchten Koordinaten der Anlagepunkte auch mit einem in die Vorrichtung 10 integrierten weiteren Messsystem bestimmt werden können, das z. B. Messtaster enthält. Für das Referenzieren eines Punkts auf dem Gegenstand 12 in Form eines Brillenglases relativ zu dem Bildsensor 46 ist es weiter grundsätzlich auch möglich, die Position des Gegenstands 12 mit einer Messvorrichtung in einem Halter zu ermitteln, der auf die Vorrichtung 10 abgestimmt ist und dessen räumliche Bemaßungen exakt bekannt sind. Damit ist es bei Anordnen des Halters für den Gegenstand 12 in Form eines Brillenglases in der Vorrichtung 10 möglich, auf die Position eines entsprechenden Punkts auf dem Gegenstand 12, d. h. auf dessen Koordinaten in einem zu dem Bildsensor 46 der Kamera 34 referenzierten Koordinatensystem 78 schließen zu können.

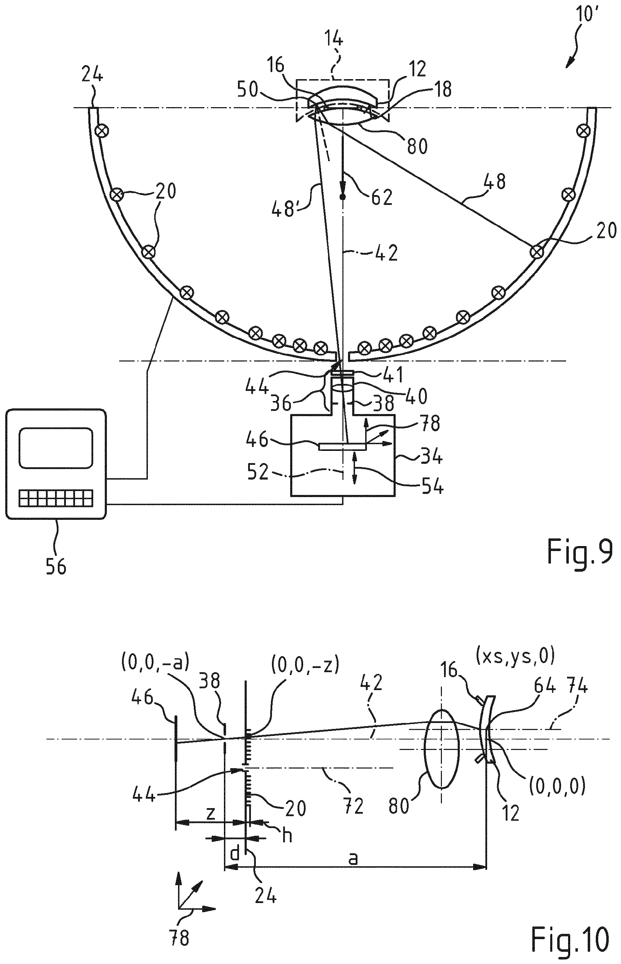

Die Fig. 9 zeigt eine zweite Vorrichtung 10' für das Vermessen der Topografie eines Gegenstands 12 in Form eines Brillenglases mit Punktlichtquellen 20. Soweit die Baugruppen und Elemente der Vorrichtung 10' den Baugruppen und Elementen der vorstehend beschriebenen Vorrichtung 10 entspricht, sind diese durch die gleichen Zahlen als Bezugszeichen kenntlich gemacht. Die Vorrichtung 10' hat eine Trägerstruktur 24 in Form einer Hemisphäre.

Bei als Brillengläsern ausgebildeten Gegenständen 12, deren Radius etwa dem Radius der Hemisphäre der Trägerstruktur 24 entspricht, werden alle reflektierten Strahlen r auf einen Punkt fallen. Hier werden deshalb nur sehr wenige Punktlichtquellen 20 auf dem Bildsensor 46 der Kamera 34 abgebildet. Das hat zur Folge, dass mit der in der Fig. 1 gezeigten Vorrichtung 10 für das Vermessen der Topografie eines Gegenstands 12 in Form eines Brillenglases solche Brillengläser im Grundsatz nicht oder allenfalls ungenau vermessen werden können.

Die in der Fig. 9 gezeigte Vorrichtung 10' für das Vermessen der Topografie eines Gegenstands 12 in Form eines Brillenglases ermöglicht demgegenüber auch das Vermessen von Brillengläsern, die einen in etwa dem Radius der Hemisphäre der Trägerstruktur 24 entsprechenden Radius haben. Soweit die Baugruppen und Elemente der Vorrichtung 10' den Baugruppen und Elementen der Vorrichtung 10 in der Fig. 1 entspricht, sind diese durch die gleichen Zahlen als Bezugszeichen kenntlich gemacht.

Die Vorrichtung 10' enthält eine dicht an dem Aufnahmebereich 14 angeordnete Feldlinse 80, die das an der optisch wirksamen Fläche 18 des Gegenstands 12 reflektierte Licht der Punktlichtquellen 20 in Richtung der Kamera 34 lenkt.

Um die Topografie der optisch wirksamen Fläche 18 eines Gegenstands 12 mittels des Computerprogramms in der Rechnereinheit 56 genau berechnen zu können, muss zu der Vorrichtung 10' neben den vorstehend zu der Vorrichtung 10 aus Fig. 1 beschriebenen Vorrichtungsgrößen in Form der Maschinenparameter, d. h. den Apparatekonstanten

- Größe der lichtempfindlichen Fläche des Bildsensors 46 und der Abstand der lichtempfindlichen Sensorpixel;

- Maßstab der optischen Abbildung der Kamera 34;

- räumliche Position und/oder Lage des Bildsensors 46 der Kamera 34 in Bezug auf die optische Achse 42 des optischen Abbildungssystems 36 der Kamera 34;

- Verzeichnung des optischen Abbildungssystems 36 der Kamera 34;

- laterale Verschiebung der Kamera 34;

- Position, d. h. den Koordinaten einer jeden Punktlichtquelle 20 in einem zu dem Bildsensor 46 der Kamera 34 referenzierten vorrichtungsfesten Koordinatensystem 78; und

- Koordinaten des Zentrums und Radius einer kugelförmigen Anlage in einem zu dem Bildsensor 46 der Kamera 34 referenzierten vorrichtungsfesten Koordinatensystem 78;

als eine weitere Vorrichtungsgröße die genaue Position, Lage und Form, d. h. insbesondere der Radius und die Dicke der Feldlinse 80 bekannt sein.

Die Feldlinse 80 bricht das von den Punktlichtquellen 20 ausgesendete Licht vor und nach der Reflexion an der optisch wirksamen Fläche 18 des Gegenstands 12 in Form eines Brillenglases. Damit wird erreicht, dass der auf die Oberflächennormale bezogene Einfallswinkel des von den Punktlichtquellen 20 ausgesendeten Lichts auf die optisch wirksame Fläche 18 des zu vermessenden Gegenstands 12 im Allgemeinen steiler wird. Damit lässt sich erreichen, dass auch die Topografie optisch wirksamer konkaver Oberflächen eines zu vermessenden Gegenstands 12 mit hoher Genauigkeit bestimmt werden kann.

Die Fig. 10 zeigt den Einfluss von Fertigungstoleranzen auf unterschiedliche Apparatekonstanten der Vorrichtung 10'. Die optische Achse 42 des optischen Abbildungssystems 36 der Kamera 34 ist hier auf einer mikroskopischen Skala gegenüber dem Zentrum 70 des Bildsensors 46 versetzt angeordnet. Die Symmetrieachse 72 der Trägerstruktur 24 ist im Allgemeinen von der optischen Achse 42 des optischen Abbildungssystems 36 der Kamera 34 und der Symmetrieachse 74 der Dreipunktauflage 16 verschieden. Die Punktlichtquellen 20 senden das Licht in dem Abstand h von der Oberfläche einer Leiterplatte 22 aus. Die Ausnehmung 44 ist in dem Abstand d von der Blende 38 des optischen Abbildungssystems 36 der Kamera 34 angeordnet. Der Bildsensor 46 ist in dem Abstand z von der Blende 38 des optischen Abbildungssystems 36 der Kamera 34 positioniert. Das Symmetriezentrum 64 der Dreipunktauflage 16 hat den Abstand a von der Ebene der Blende 38 des optischen Abbildungssystems 36 der Kamera 34.

Die genaue Kenntnis der Apparatekonstanten ist erforderlich, damit mit der Vorrichtung für das Vermessen der Topografie eines Gegenstands 12 in Form eines Brillenglases eine hohe Messgenauigkeit erzielt werden kann.

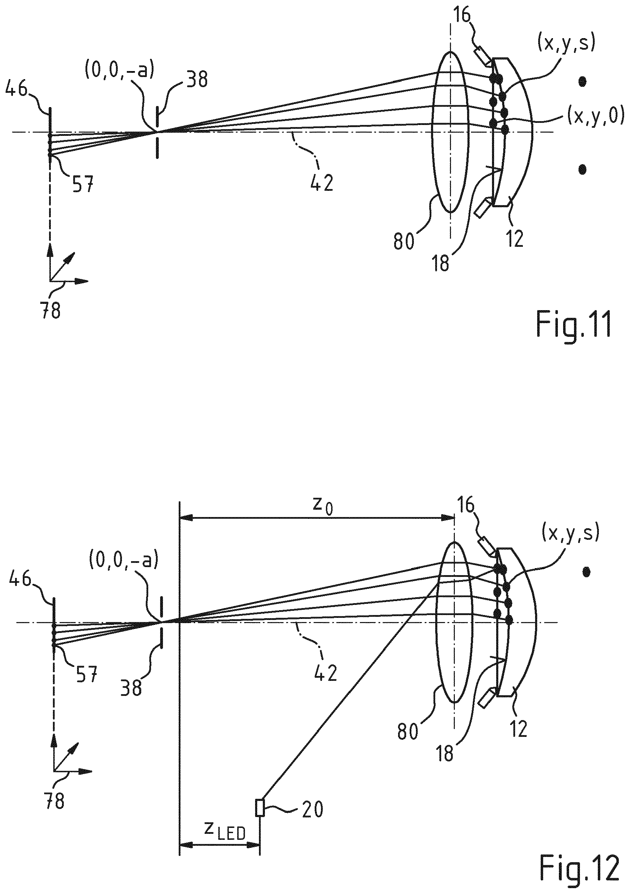

Das genaue Berechnen der Topografie der optisch wirksamen Fläche 18 eines Gegenstands 12 in Form eines Brillenglases wird anhand der Fig.11 und Fig. 12 nachfolgend erläutert.

Das Computerprogramm in der Rechnereinheit 56 der Vorrichtung macht hier wiederum für das Berechnen der Topografie der optisch wirksamen Fläche 18 des Gegenstands 12 von einem Algorithmus Gebrauch, mit dem folgende Schritte durchgeführt werden:

| | |
|---|---|
| Schritt 1: | Bestimmen der Zentroide 58 der einzelnen Intensitätsverteilungen in einer Helligkeitsverteilung auf der lichtempfindlichen Fläche des Bildsensors 46. |
| Schritt 2: | Zuordnen der Zentroide 58 einer Intensitätsverteilung auf der lichtempfindlichen Fläche des Bildsensors 46 zu einer bestimmten Punktlichtquelle 20. |
| Schritt 3: | Bestimmen des Ortes der Reflexion auf der optisch wirksamen Fläche 18 des Gegenstands 12 für eine jede Zentroide 58. |
| Schritt 4: | Berechnen der Flächennormalen $\vec{n}$ auf der optisch wirksamen Fläche 18 des Gegenstands 12 für eine jede Zentroide 58. |
| Schritt 5: | Berechnen der Topografie, z. B. als Form und/oder als Pfeilhöhen s der optisch wirksamen Fläche 18 durch Integration der Flächennormalen $\vec{n}$, d. h. durch Integration der durch die Flächennormalen $\vec{n}$ bestimmten Richtungsableitungen der Fläche 18. |
| Schritt 6: | Berechnen der lokalen Krümmungen der optisch wirksamen Fläche 18 des Gegenstands 12 durch Differenzieren der Flächennormalen $\vec{n}$, d. h. durch Ableiten der Einträge des Vektors der Flächennormalen $\vec{n}$. |
| Schritte nach Schritt 6: | Iteratives Wiederholen der Schritte 4 bis 6 bis zu einem Konvergenzkriterium, d. h. diese Schritte werden solange wiederholt, bis eine Normdifferenz der in zwei aufeinanderfolgenden Schritten berechneten Topografien kleiner ist als eine vorgegebene Toleranz. |

Um den Ort der Reflexion auf der optische wirksamen Fläche 18 des Gegenstands 12 in Form eines Brillenglases zu bestimmen, berechnet das Computerprogramm in der Rechnereinheit 56 der Vorrichtung 10' hier unter Anwendung des Snell'schen Brechungsgesetzes in einem sogenannten Standard Raytracing Verfahren einen Einfallstrahl auf die optisch wirksame Fläche 18 des Gegenstands 12 in Form eines Brillenglases und dann den Schnittpunkt dieses Einfallsstrahles mit dem Gegenstand 12. Darauf wird mittels des Computerprogramms eine Zielung ermittelt, mit der die Richtung des reflektierten Strahls aufgefunden wird, der eine entsprechende Punktlichtquelle 20 trifft. Das Ermitteln dieser Zielung erfolgt dann in einer Optimierungsroutine, die den Abstand der Punktlichtquelle 20 zu dem Austrittsstrahl aus der Feldlinse 80 minimiert. Diese Optimierung kann mehrere Lösungen ergeben, wobei das Computerprogramm diejenige wählt, die Nachbarpunkten am ähnlichsten ist.

Die entsprechende Zielung liefert dann die Richtung des reflektierten Strahles und damit den Reflexionswinkel auf dem Prüfling, bzw. die Flächennormalen $\vec{n}$ am Auftreffpunkt 50 des entsprechenden einfallenden Strahles i. Die Berechnung der optisch wirksamen Fläche 18 des Gegenstands 12 in Form eines Brillenglases erfolgt dann vorliegend in dem gleichen Verfahren wie ohne die Feldlinse 80. Die Feldlinse 80 ist deshalb nur für das Berechnen der Flächennormalen $\vec{n}$ von Bedeutung.

Es sei bemerkt, dass sich die vorstehend beschriebenen Vorrichtungen grundsätzlich für das Vermessen der Topografie der Oberfläche von beliebigen Messobjekten eignen, deren Oberfläche einen Reflexionsgrad R > 50% für das Licht der Punktlichtquellen hat. Entsprechende Messobjekte können insbesondere sein: Optische Elemente in Form von Linsen, Optiken, Sphären und Asphären, Brillengläser, Gleitsichtgläser, metallische Bauteile mit einer glänzenden, insbesondere polierten Oberfläche, lackierte Bauteile sowie Kunststoffbauteile. Darüber hinaus kann mit einer vorstehend beschriebenen Vorrichtung grundsätzlich auch die Topografie eines menschlichen oder tierischen Auges vermessen werden.

Zusammenfassend sind insbesondere folgende bevorzugte Merkmale der Erfindung festzuhalten: Die Erfindung betrifft ein Verfahren und eine Vorrichtung 10 für das Vermessen der Topografie und/oder der Gradienten und/oder der Krümmung einer optisch wirksamen Fläche 18 eines Gegenstands 12. Die Vorrichtung 10 ermöglicht das Anordnen des Gegenstands 12 in einem Aufnahmebereich 14 mit einer an den Gegenstand 12 anlegbaren Anlage 17. Dabei ist in dem Aufnahmebereich 14 die Position und/oder Lage wenigstens eines Punktes auf der Fläche 18 des Gegenstands in einem vorrichtungsfesten Koordinatensystem 78 ermittelbar. In der Vorrichtung 10 gibt es eine Vielzahl von Punktlichtquellen 20, die Licht bereitstellen, das an der zu vermessenden Fläche 18 eines in dem Aufnahmebereich 14 angeordneten Gegenstands reflektiert wird. Die Vorrichtung 10 weist wenigstens eine Kamera 34 mit einer Objektivbaugruppe 40 und mit einem Bildsensor 46 für das Erfassen einer Helligkeitsverteilung auf, die von dem an der zu vermessenden Fläche 18 reflektierten Licht der Punktlichtquellen 20 auf einem Bildsensor 46 hervorgerufen wird.

**Bezugszeichenliste:**

| | |
|---|---|
| 10, 10' | Vorrichtung |
| 12 | Gegenstand |
| 14 | Aufnahmebereich |
| 16 | Dreipunktauflage |
| 17 | Anlage |
| 18 | optisch wirksame Fläche |
| 19 | Trägerstruktur |
| 20 | Punktlichtquelle, Lichtpunkt |
| 22, 22', 22" | Leiterplatten |
| 24 | Trägerstruktur |
| 26 | Hyperfläche |
| 28 | Halbraum |
| 30 | Rand |
| 32 | optisch wirksame Fläche |
| 34 | Kamera |
| 36 | Abbildungssystem |
| 38 | Blende |
| 40 | Objektivbaugruppe |
| 41 | UV-Sperrfilter |
| 42 | optische Achse |
| 44 | Ausnehmung |
| 46 | Bildsensor |
| 48, 48' | Lichtstrahl |
| 50 | Punkt |
| 52 | Verstellachse |
| 54 | Doppelpfeil |
| 56 | Rechnereinheit |
| 57 | Leuchtfleck |
| 58 | Zentroide |
| 60 | Raumwinkelelement |
| 62 | Kugelkoordinatensystem |
| 64 | Symmetriezentrum |
| 66 | Stützstelle |
| 68 | Nordpol |
| 69 | Hemisphäre |
| 70 | Zentrum |
| 72 | Symmetrieachse |
| 74 | Symmetrieachse |

| 75 | Gitterverbund |
| 76 | Testobjekt |
| 78 | Koordinatensystem |
| 79 | Helligkeitsverteilung |
| 80 | Linse, Feldlinse |
| 81 | Bild |

**Patentansprüche**

1. Vorrichtung (10) für das Vermessen der Topografie und/oder der Gradienten und/oder der Krümmung einer optisch wirksamen Fläche (18) eines Gegenstands (12);
mit mehreren Punktlichtquellen (20) für das Beleuchten der Fläche (18), und
mit wenigstens einer Kamera (34) mit einer Objektivbaugruppe (40) und mit einem Bildsensor (46) für das Erfassen einer Helligkeitsverteilung, die von an der Fläche (18) reflektiertem Licht der mehreren Punktlichtquellen (20) auf dem Bildsensor (46) hervorgerufen wird;
**dadurch gekennzeichnet, dass**
der Bildsensor (46) der Kamera (34) entlang einer die Objektivbaugruppe (40) durchsetzenden Verstellachse (52) linearbeweglich verlagerbar angeordnet ist;
wobei Mittel für das Bestimmen einer Position des Bildsensors (46) auf der Verstellachse (52) vorgesehen sind; und wobei
Kompensationsmittel für das Kompensieren einer Drift der mittels des Bildsensors (46) erfassten Helligkeitsverteilung aufgrund einer Verlagerung entlang der Verstellachse (52) in Abhängigkeit der Position des Bildsensors (46) auf der Verstellachse (52) vorgesehen sind.

2. Vorrichtung nach Anspruch 1, **dadurch gekennzeichnet, dass** die Objektivbaugruppe (40) eine mit der Verstellachse (52) fluchtende optische Achse (42) hat.

3. Vorrichtung nach Anspruch 1 oder 2, **gekennzeichnet durch** eine Einrichtung (16) zum Anordnen des zu vermessenden Gegenstands (12) an einer an dem Gegenstand (12) anliegenden Anlage in einem Aufnahmebereich (14).

4. Vorrichtung nach Anspruch 3, **gekennzeichnet durch** eine Vielzahl von Punktlichtquellen (20), die Licht bereitstellen, das an der zu vermessenden Fläche (18) eines in dem Aufnahmebereich angeordneten Gegenstands (12) reflektiert wird.

5. Vorrichtung nach Anspruch 4, **gekennzeichnet durch** eine Rechnereinheit (56) mit einem Computerprogramm und mit einem Speicher, auf dem das Computerprogramm abgespeichert ist, wobei das Computerprogramm aus der mit dem Bildsensor (46) erfassten Helligkeitsverteilung, die von dem an der zu vermessenden Fläche (18) reflektierten Licht der Punktlichtquellen (20) auf dem Bildsensor (46) hervorgerufen wird, die Topografie und/oder die Gradienten und/oder die Krümmung einer optisch wirksamen Fläche (18) des Gegenstands (12) mit Algorithmen berechnet.

6. Vorrichtung nach einem der Ansprüche 4 oder 5, **dadurch gekennzeichnet, dass** die Punktlichtquellen (20) auf einem dreidimensionalen Halbraum angeordnet sind.

7. Vorrichtung nach einem der Ansprüche 4 bis 6, **gekennzeichnet durch** eine zwischen dem Aufnahmebereich (14) und der Objektivbaugruppe (40) angeordnete Linse (80), deren Brechkraft positiv oder negativ ist.

8. Vorrichtung nach Anspruch 7, **dadurch gekennzeichnet, dass** die Linse (80) eine mit der optischen Achse (42) der Objektivbaugruppe (40) fluchtende optische Achse hat.

9. Verfahren für das Vermessen der Topografie und/oder der Gradienten und/oder der Krümmung einer optisch wirksamen Fläche (18) eines Gegenstands (12) umfassend den Schritt des Bereitstellens wenigstens einer Kamera (34), wobei
die Kamera (34) eine Objektivbaugruppe (40) und einen Bildsensor (46) für das Erfassen einer Helligkeitsverteilung enthält, die von dem an der zu vermessenden Fläche (18) reflektierten Licht auf einem Bildsensor (46) hervorgerufen wird;
**dadurch gekennzeichnet, dass**

als ein weiterer Schritt das Verlagern des Bildsensors (46) der Kamera (34) entlang einer die Objektivbaugruppe (40) durchsetzenden Verstellachse (52) vorgesehen ist, wobei die Position des Bildsensors (46) auf der Verstellachse (52) bestimmt wird; und

als ein weiterer Schritt eine Drift der mittels des Bildsensors (46) erfassten Helligkeitsverteilung aufgrund einer Verlagerung entlang der Verstellachse (52) in Abhängigkeit der Position des Bildsensors (46) auf der Verstellachse (52) kompensiert wird.

**10.** Computerprogramm mit Programmcodemitteln zur Durchführung eines Verfahrens nach Anspruch 9, wenn das Programm auf einer Rechnereinheit (56) ausgeführt wird.

**Claims**

**1.** Apparatus (10) for measuring the topography and/or the gradients and/or the curvature of an optically effective surface (18) of an article (12);

comprising a plurality of point light sources (20) for illuminating the surface (18), and

comprising at least one camera (34) with a lens assembly (40) and with an image sensor (46) for capturing a brightness distribution, which is caused on the image sensor (46) by light of the plurality of point light sources (20) that is reflected at the surface (18);

**characterized in that**

the image sensor (46) of the camera (34) is arranged in a linearly movable displaceable fashion along an adjustment axis (52) that passes through the lens assembly (40);

wherein means are provided for determining a position of the image sensor (46) on the adjustment axis (52); and wherein

compensation means are provided for compensating a drift of the brightness distribution, captured by means of the image sensor (46), on account of the displacement along the adjustment axis (52) as a function of the position of the image sensor (46) on the adjustment axis (52).

**2.** Apparatus according to Claim 1, **characterized in that** the lens assembly (40) has an optical axis (42) that lies flush with the adjustment axis (52).

**3.** Apparatus according to Claim 1 or 2, **characterized by** a device (16) for arranging the article (12) to be measured on an abutment resting against the article (12) in a recording region (14).

**4.** Apparatus according to Claim 3, **characterized by** a multiplicity of point light sources (20) that provide light, said light being reflected at the surface (18) of an article (12) to be measured that is arranged in the recording region.

**5.** Apparatus according to Claim 4, **characterized by** a computer unit (56) with a computer program and with a memory, in which the computer program is stored, wherein the computer program calculates the topography and/or the gradients and/or the curvature of an optically effective surface (18) of the article (12) by way of algorithms from a brightness distribution captured by the image sensor (46), said brightness distribution being caused on the image sensor (46) by light of the point light sources (20) that is reflected at the surface (18) to be measured.

**6.** Apparatus according to either of Claims 4 and 5, **characterized in that** the point light sources (20) are arranged on a three-dimensional half-space.

**7.** Apparatus according to any one of Claims 4 to 6, **characterized by** a lens element (80) arranged between the recording region (14) and the lens assembly (40), the refractive power of said lens element being positive or negative.

**8.** Apparatus according to Claim 7, **characterized in that** the lens element (80) has an optical axis that lies flush with the optical axis (42) of the lens assembly (40).

**9.** Method for measuring the topography and/or the gradients and/or the curvature of an optically effective surface (18) of an article (12), comprising the step of providing at least one camera (34), wherein

the camera (34) contains a lens assembly (40) and an image sensor (46) for capturing the brightness distribution, which is caused on an image sensor (46) by the light that is reflected at the surface (18) to be measured;

**characterized in that**

displacing the image sensor (46) of the camera (34) along an adjustment axis (52) that passes through the lens assembly (40) is provided as a further step, wherein the position of the image sensor (46) is determined on the adjustment axis (52); and
a drift of the brightness distribution, captured by means of the image sensor (46), on account of a displacement along the adjustment axis (52) is compensated as a function of the position of the image sensor (46) on the adjustment axis (52) as a further step.

10. Computer program having program code means for implementing a method according to Claim 9 when the program is executed on a computer unit (56).

**Revendications**

1. Arrangement (10) de mesurage de la topographie et/ou des gradients et/ou de la courbure d'une surface (18) optiquement active d'un objet (12) ;
comprenant plusieurs sources de lumière ponctuelles (20) pour l'éclairage de la surface (18), et
comprenant au moins une caméra (34) pourvue d'un sous-ensemble formant objectif (40) et d'un capteur d'image (46) pour l'acquisition d'une distribution de luminosité qui est produite sur le capteur d'image (46) par de la lumière des plusieurs sources de lumière ponctuelles (20) réfléchie sur la surface (18) ;
**caractérisé en ce que**
le capteur d'image (46) de la caméra (34) est monté de manière à pouvoir être déplacé de manière mobile linéairement le long d'un axe de positionnement (52) qui traverse le sous-ensemble formant objectif (40) ;
des moyens destinés à déterminer une position du capteur d'image (46) sur l'axe de positionnement (52) étant présents ; et
des moyens de compensation destinés à compenser une dérive de la distribution de luminosité acquise au moyen du capteur d'image (46) en raison d'un décalage le long de l'axe de positionnement (52) en fonction de la position du capteur d'image (46) sur l'axe de positionnement (52) étant présents.

2. Arrangement selon la revendication 1, **caractérisé en ce que** le sous-ensemble formant objectif (40) possède un axe optique (42) dans l'alignement de l'axe de positionnement (52).

3. Arrangement selon la revendication 1 ou 2, **caractérisé par** un dispositif (16) destiné à disposer l'objet (12) à mesurer contre un appui reposant contre l'objet (12) dans une zone d'accueil (14).

4. Arrangement selon la revendication 3, **caractérisé par** une pluralité de sources de lumière ponctuelles (20) qui fournissent de la lumière, laquelle est réfléchie sur la surface (18) à mesurer d'un objet (12) disposé dans la zone d'accueil.

5. Arrangement selon la revendication 4, **caractérisé par** une unité de calcul (56) comprenant un programme informatique et comprenant une mémoire dans laquelle est enregistré le programme informatique, le programme informatique calculant la topographie et/ou le gradient et/ou la courbure d'une surface (18) optiquement active de l'objet (12) avec des algorithmes à partir de la distribution de luminosité acquise par le capteur d'images (46) qui est produite sur le capteur d'image (46) par la lumière des sources de lumière ponctuelles (20) réfléchie sur la surface (18) à mesurer.

6. Arrangement selon l'une des revendications 4 ou 5, **caractérisé en ce que** les sources de lumière ponctuelles (20) sont disposées sur un espace semi-infini tridimensionnel.

7. Arrangement selon l'une des revendications 4 à 6, **caractérisé par** une lentille (80) disposée entre la zone d'accueil (14) et le sous-ensemble formant objectif (40), dont le pouvoir réfringent est positif ou négatif.

8. Arrangement selon la revendication 7, **caractérisé en ce que** la lentille (80) possède un axe optique dans l'alignement de l'axe optique (42) du sous-ensemble formant objectif (40).

9. Procédé de mesurage de la topographie et/ou des gradients et/ou de la courbure d'une surface (18) optiquement active d'un objet (12), comprenant l'étape de fourniture d'au moins une caméra (34), procédé selon lequel la caméra (34) contient un sous-ensemble formant objectif (40) et un capteur d'image (46) pour l'acquisition d'une distribution de luminosité qui est produite sur un capteur d'image (46) par la lumière réfléchie sur la surface (18) à mesurer ;

**caractérisé en ce que**

une étape supplémentaire consiste à déplacer le capteur d'image (46) de la caméra (34) le long d'un axe de positionnement (52) qui traverse le sous-ensemble formant objectif (40), la position du capteur d'image (46) sur l'axe de positionnement (52) étant déterminée ; et

une étape supplémentaire consiste à compenser une dérive de la distribution de luminosité acquise au moyen du capteur d'image (46) en raison d'un décalage le long de l'axe de positionnement (52) en fonction de la position du capteur d'image (46) sur l'axe de positionnement (52) .

10. Programme informatique comprenant des moyens de code de programme destinés à mettre en œuvre un procédé selon la revendication 9 lorsque le programme est exécuté sur une unité de calcul (56).

EP 3 462 129 B1

Fig.1

Fig.2

21

EP 3 462 129 B1

Fig.3

Fig.4

22

Fig.5

Fig.6a

Fig.6b

23

$$\Delta r \sim R \star n$$

$$n=0$$

$$\Delta z \sim R(1-\sqrt{1-n^2})$$

$$n=dz/dr$$

17    R

## Fig.7

76

## Fig.8a

79

## Fig.8b

81

16

## Fig.8c

Fig.9

Fig.10

Fig.11

Fig.12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4998819 A
- DE 102013208091 A1
- DE 102013219838 A1
- DE 102011010252 A1
- US 20060017720 A1